# EUROPÄISCHE PATENTSCHRIFT

(11) **EP 2 203 330 B1**
(45) Veröffentlichungstag und Bekanntmachung des Hinweises auf die Patenterteilung: **12.09.2012**
(21) Anmeldenummer: 08844011.0
(22) Anmeldetag: 30.10.2008
(51) Int. Cl.: B60R 21/231, B60R 21/217, B60R 21/232, B60R 21/235, B60R 21/237

(54) **AIRBAGMODUL**
AIRBAG MODULE
MODULE AIRBAG

(30) Priorität: 30.10.2007 DE 202007015431 U
(43) Veröffentlichungstag der Anmeldung: 07.07.2010
(73) Patentinhaber: Takata AG, 63743 Aschaffenburg (DE)
(72) Erfinder: WEYRICH, Christian, 89275 Eichingen (DE)
(74) Vertreter: Müller, Wolfram Hubertus
(86) Internationale Anmeldenummer: PCT/EP2008/064729
(87) Internationale Veröffentlichungsnummer: WO 2009/056598

(56) Entgegenhaltungen:
- EP-A- 1 310 409
- EP-A- 1 698 522
- US-A1- 2003 094 799
- US-A1- 2005 134 022

## Beschreibung

Die Erfindung betrifft ein Airbagmodul, insbesondere für ein Kraftfahrzeug, nach dem Oberbegriff des Anspruchs 1.

Eine derartige Airbageinrichtung dient insbesondere zum Schutz eines Fahrzeuginsassen, indem in einem Crashfall, z. B. bei einem Seitenaufprall, eine Kollision des Insassen mit einer seitlichen Fensterscheibe eines Kraftfahrzeuges bzw. einer seitlichen Säule der Fahrzeugstruktur, einem sonstigen Kraftfahrzeugteil und/oder mit einem in das Fahrzeug eindringenden Objekt verhindert wird.

Derartige Schutzvorrichtungen für Fahrzeuginsassen auf Basis einer Airbageinrichtung (auch in Form eines Airbagmoduls) sind allgemein bekannt. Regelmäßig dient eine solche Schutzvorrichtung nicht nur zum Schutz eines einzelnen, z. B. auf einem Vordersitz eines Kraftfahrzeugs befindlichen Fahrzeuginsassen, sondern vielmehr dem (gleichzeitigen) Schutz mehrerer Fahrzeuginsassen, insbesondere zweier in einem Kraftfahrzeug hintereinander sitzender Insassen, in dem sich die Schutzvorrichtung in Form einer Airbageinrichtung (Airbagmodul) z.B. nicht nur vor einer vorderen, sondern auch vor mindestens einer hinteren Seitenscheibe des Kraftfahrzeugs erstreckt, also etwa in Fahrzeugsrichtung von der so genannten A-Säule über die B-Säule bis zur C-oder D-Säule eines Kraftfahrzeugs verläuft. Es kann sich natürlich auch um eine Fahrerairbageinrichtung oder eine Beifahrerairbageinrichtung handeln.

Ein Gassack einer solchen Airbageinrichtung bzw. -moduls kann unterschiedliche Körperbereiche von zu schützenden Insassen oder Personen während eines Crashfalls schützen, insbesondere den Kopf oder den Thorax eines Insassen.

Ein derartiges Airbagmodul umfasst einen Gassack, der zum Schutz einer Person insbesondere in oder an einem Kraftfahrzeug aufblasbar ist, eine Gassackhülle des Gassackes, die einen Innenraum des Gassackes umgibt, der zum Aufblasen des Gassackes mit Gas befüllbar ist, einen Gasgenerator zum Freisetzen eines zum Aufblasen des Gassackes benötigten Gases, eine Einführöffnung der Gassackhülle, wobei der Gasgenerator durch jene Einführöffnung in den Innenraum des Gassackes eingeführt ist, so dass durch den Gasgenerator freigesetztes bzw. aus dem Gasgenerator ausströmendes Gas in den Innenraum des Gassackes gelangen kann, einen die Einführöffnung begrenzenden Randbereich der Einführöffnung, der den Gasgenerator ringförmig umgreift, und ein Dichtmittel zum Abdichten der besagten Einführöffnung.

Die Einführöffnung muss dabei nicht notwendigerweise an einer Naht, insbesondere einer Umfangsnaht eines Gassackes oder an einer Klappachse, entlang der Gassackteile eines Gassackes aufeinander geklappt sind, angeordnet sein, sondern kann insbesondere auch beabstandet von einer Zuschnittskontur eines Gassackteiles angeordnet sein. Insbesondere bei Schmetterlingszuschnitten wird das Dichtmittel zusammen mit dem Gasgenerator in der Faltkante (Klappachse) der Gassackhülle angeordnet.

EP 1698 522 A1 offenbart ein Airbag modul gemäβ dem oberbegriff des Anspruchs 1.

Der vorliegenden Erfindung liegt das Problem zugrunde, ein Airbagmodul der eingangs genannten Art bereitzustellen, bei dem eine Einführöffnung des Gassackes für einen Gasgenerator auf einfache und kostengünstige Weise abdichtbar ist.

Dieses Problem wird durch ein Airbagmodul mit den Merkmalen des Anspruchs 1 gelöst.

Danach ist vorgesehen, dass das Dichtmittel so zwischen dem Randbereich und dem in die Einführöffnung eingeführten Gasgenerator angeordnet ist, dass das Dichtmittel beim Aufblasen des Gassackes durch aus dem Gasgenerator ausströmendes Gas gegen den besagten Randbereich der Einströmöffnung gedrückt wird, um diese abzudichten (selbsttätige Dichtung).

Die erfindungsgemäße Lösung ermöglicht es, den Gasgenerator so in die Einführöffnung bzw. das Dichtmittel einzuführen, dass ein Zündstecker nachträglich in eine aus dem Innenraum des Gassackes herausragende Anschlussseite des Gasgenerators eingesteckt werden kann. Die erfindungsgemäße Lösung ermöglicht des Weiteren, dass der Gasgenerator auf einfache Weise in das vorgefertigte Modul bzw. den Gassack eingeführt und dabei exakt positioniert werden kann.

Gemäβ der Erfindung wird das Dichtmittel mit einem den Gasgenerator entlang des Randbereiches der Einführöffnung umlaufenden mittleren Abschnitt des Dichtmittels gegen den Randbereich jener Einführöffnung gedrückt.

Vorzugsweise ist der Gasgenerator entlang einer Einführrichtung in die Einführöffnung eingeführt, wobei der umlaufende mittlere Abschnitt des Dichtmittels bevorzugt dazu ausgebildet ist, sich in einer Querschnittsebene aufzuweiten, die senkrecht zur Einführrichtung orientiert ist bzw. parallel zur Öffnungsebene der Einführöffnung verläuft. Dabei ist das Dichtmittel vorzugsweise dazu ausgebildet, sich dann aufzuweiten, wenn durch den Gasgenerator bereitgestelltes Gas auf den mittleren Abschnitt auftrifft und diesen vom Gasgenerator weg nach außen drängt und dabei gegen den umlaufenden Randbereich der Einführöffnung der Gassackhülle abdichtend andrückt.

Zum Ausströmen des durch den Gasgenerator bereitgestellten Gases weist der Gasgenerator vorzugsweise zumindest eine Ausströmöffnung auf, wobei der mittlere Abschnitt bezüglich jener mindestens einen Ausströmöffnung vorzugsweise derart angeordnet ist, dass er jener mindestens einen Ausströmöffnung gegenüber liegt bzw. aus der Ausströmöffnung ausströmendes Gas auf den mittleren Abschnitt auftrifft, wodurch die besagte Aufweitung des mittleren Abschnitts in der besagten Querschnittsebene vonstatten geht.

Um das Dichtmittel abdichtend am Gasgenerator festzulegen, ist ein das Dichtmittel umgreifendes Klemmelement vorgesehen, mittels dessen das Dichtmittel insbesondere außerhalb des Innenraumes des Gassackes am Gasgenerator festgelegt ist. Hierbei kann es sich um eine herkömmliche Klemm-Schelle handeln.

Vorzugsweise weist das Dichtmittel einen mit dem mittleren Abstand des Dichtmittels verbundenen ersten Endabschnitt auf, der insbesondere einstückig an den besagten mittleren Abschnitt des Dichtmittels angeformt ist. Dabei ist das Klemmmittel bevorzugt dazu eingerichtet und vorgesehen, den ersten Endabschnitt des Dichtmittels gegen den Gasgenerator zu drücken, so dass das Dichtmittel mit jenem ersten Endabschnitt des Dichtmittels (insbesondere außerhalb des Innenraums des Gassacks) eng am Gasgenerator anliegt.

Besonders bevorzugt ist das Dichtmittel aus zumindest einer flexiblen Materiallage gefertigt, wobei es sich bei jener Materiallage insbesondere um ein Gassackmaterial handelt, aus dem auch die Gassackhülle hergestellt sein kann.

Besonders bevorzugt ist die Materiallage zur Ausbildung des Dichtmittels entlang einer Wickelrichtung aufgerollt (Abdicht-Wickel), so dass die Materiallage eine umlaufende Wandung des Dichtmittels bildet, die ihrerseits eine Aufnahme für den Gasgenerator definiert. Insbesondere ist die Materiallage so entlang der Wickelrichtung aufgewickelt, dass der mittlere Abschnitt des resultierenden Dichtmittels entlang der Wickelrichtung umläuft. Vorzugsweise wird die Materiallage entlang der Wickelrichtung so aufgewickelt, dass sie weiterhin abschnittsweise überlappt, d.h., die Wandung weist zumindest abschnittsweise zwei übereinander liegende (entlang der Einführrichtung erstreckte) Bereiche der Materiallage auf, so dass sich der mittlere Abschnitt im Querschnitt aufweiten kann, wenn aus dem Gasgenerator ausströmendes Gas den den Gasgenerator umgreifenden mittleren Abschnitt des Dichtmittels beaufschlagt. Da die Materiallage entlang der Wickelrichtung überlappt und die überlappenden Bereiche nicht über die gesamte Länge des Dichtmittels miteinander verbunden sind, weitet sich der mittlere Abschnitt der Materiallage auf, wenn Gas auf diesen Abschnitt auftritt; denn jene überlappenden Bereiche können entsprechend der in den mittleren Abschnitt eingeleiteten Kräfte aneinander entlanggleiten (und zwar in entgegen gesetzte Richtungen). Des Weiteren wird durch das auf den mittleren Abschnitt auftreffende Gas der Abstand zwischen den überlappenden Bereichen (Lagen) verringert. Diese beiden Bewegungen des zweiten Abschnitts bzw. der übereinander liegenden Bereiche (Lagen) der Materiallage geht mit einer Vergrößerung des Querschnitts des zweiten Abschnitts einher (so genannter Filmspuleneffekt).

Dieser Filmspuleneffekt lässt sich insbesondere durch die Anzahl übereinander liegender Bereiche der Materiallage kontrollieren. Insbesondere ist vorgesehen, dass die Wandung entlang ihres gesamten entlang der Wickelrichtung verlaufenden Umfangs zumindest zwei übereinander liegende Lagen aufweist. Vorzugsweise sind mindestens zwei Lagen, jedoch bevorzugt maximal vier Lagen vorgesehen. Es ist jedoch auch denkbar auch mehr als vier Lagen vorzusehen. Bevorzugt sind 2 ¼ Lagen vorgesehen, d.h., zwei vollständig umlaufende Lagen sowie ein zusätzlicher Überlapp von einer viertel Lage, die entlang der Wickelrichtung ein Viertel des Umfangs des Dichtmittels bedeckt.

Besonders bevorzugt verläuft die Wickelrichtung quer zur Einführrichtung, entlang der der Gasgenerator in die senkrecht zur Einführrichtung orientierte Einführöffnung eingeführt wird.

Damit der aufgewickelte Zustand der Materiallage, aus der das Dichtmittel gebildet ist, dauerhaft aufrechterhalten werden kann, sind übereinander liegende Lagen der die Wandung des Dichtmittels bildende Materiallage im Bereich des ersten Endabschnittes des Dichtmittels und/oder im Bereich des zweiten Endabschnitts des Dichtmittels so miteinander verbunden (insbesondere durch eine Durchnaht, die jene übereinander liegenden Lagen der Wandung durchstößt), dass sich die betreffenden Endabschnitte nicht abwickeln können bzw. im Querschnitt nicht aufweiten können oder sich im Querschnitt weniger aufweiten als der mittlere Abschnitt. Insbesondere kann eine geringfügige Aufweitung der Endabschnitte im Querschnitt durch ein Scheren/Dehnen der besagten Verbindung (Durchnaht) der übereinander liegenden Lagen erzeugt werden. Da allerdings im mittleren Abschnitt eine derartige Verbindung übereinander liegender Lagen der die Wandung bildenden Materiallage nicht vorgesehen sind, kann sich der mittlere Abschnitt nach wie vor entsprechend des Filmspuleneffektes (siehe oben) aufweiten bzw. stärker aufweiten, wenn aus dem Gasgenerator austretendes Gas diesen mittleren Abschnitt beaufschlagt und nach außen gegen den die Einführöffnung des Gassackes begrenzenden Randbereich drückt.

Vorzugsweise ist der erste Endabschnitt des Dichtmittels über den mittleren Abschnitt des Dichtmittels mit dem zweiten Endabschnitt des Dichtmittels verbunden, wobei jener zweite Endabschnitt insbesondere innerhalb des Innenraums des Gassackes angeordnet ist und insbesondere einstückig an den mittleren Abschnitt angeformt ist. Vorzugsweise ist das Dichtelement über den insbesondere innerhalb der Gassackhülle bzw. innerhalb des Innenraumes des Gassackes angeordneten zweiten Endabschnitt an der Gassackhülle festgelegt, insbesondere mittels einer Naht.

In einer Variante der Erfindung ist ein Diffusor vorgesehen, der insbesondere an dem zweiten Endabschnitt festgelegt ist, wobei jener Diffusor vorzugsweise einstückig an den zweiten Endabschnitt des Dichtmittels angeformt ist. Vorzugsweise ist das Dichtmittel über jenen Diffusor an der Gassackhülle des Gassackes befestigt. Der Diffusor dient zum Verteilen (Lenken) des durch den Gasgenerator bereitgestellten Gases.

Besonders bevorzugt besteht die Materiallage, aus der auch der Diffusor ausgebildet sein kann, aus einem Gassackmaterial, insbesondere einem Gewebe, aus dem insbesondere auch die Gassackhülle gefertigt sein kann.

Der zum Aufblasen des Gassackes dienende Gasgenerator erstreckt sich vorzugsweise entlang einer Erstreckungsrichtung längs, wobei jener Gasgenerator insbesondere als ein Rohrgasgenerator ausgebildet ist. Längs erstreckt bedeutet dabei, dass der besagte Gegenstand entlang jener Erstreckungsrichtung eine größere Ausdehnung aufweist als quer zu jener Erstreckungsrichtung.

Vorzugsweise fällt die besagte Erstreckungsrichtung mit der Einführrichtung zusammen, d.h., bei einem Gasgenerator in Form eines Rohrgasgenerators ist jener mit einer Stirnseite voran in die Einführöffnung der Gassackhülle eingeführt.

Insbesondere ist der Gasgenerator so durch die Einführöffnung in den Innenraum des Gassackes eingeführt, dass der Gasgenerator zum Verbinden des Gasgenerators mit einer fahrzeugseitigen Elektronik, über die der Gasgenerator auslösbar ist, mit einem freien Endabschnitt aus dem Innenraum des Gassackes heraus steht, wobei an jenem freien Endabschnitt des Gasgenerators eine entsprechende Kontakteinheit zum elektrischen Verbinden des Gasgenerators mit der besagten kraftfahrzeugseitigen Elektronik vorgesehen ist.

Um ein Einführen des Gasgenerators entlang der Einführrichtung in die Einführöffnung der Gassackhülle zu erleichtern, ist der erste Endabschnitt des Dichtmittels vorzugsweise trichterförmig ausgebildet oder weist Führungselemente auf, die den Gasgenerator beim Einfädeln in das Dichtmittel führen bzw. positionieren. Zweckmäßigerweise wird daher zuerst das besagte Dichtmittel in die Einführöffnung der Gassackhülle eingeführt, so dass der erste Endabschnitt des Dichtmittels , der vorzugsweise trichterförmig ausgebildet ist, aus jener Gassackhülle heraus steht und mit seinem ersten Endabschnitt dem einzuführenden Gasgenerator zugewandt ist. Der Gasgenerator wird dann (mit seiner Stirnseite voran) in den (trichterförmigen) ersten Endabschnitt des Dichtmittels eingeführt und dabei gleichzeitig in einer quer zur Einführrichtung verlaufenden Ebene positioniert. Der Gasgenerator wird dabei soweit in die Einführrichtung in den Innenraum des Gassackes eingeführt, dass aus dem Gasgenerator ausströmendes Gas auf den mittleren Abschnitt des Dichtmittels treffen kann und der die Einführöffnung begrenzende Randbereich den Gasgenerator im Querschnitt umgreift.

In einer Variante der Erfindung ist die Gassackhülle aus zumindest zwei Gassackteilen zusammengesetzt, die - bezogen auf einen flach ausgebreiteten Zustand der Gassackhülle, in dem die beiden Gassackteile flach ausgebreitet aufeinander liegen - entlang eines äußersten, entlang der Einführrichtung erstreckten Randabschnitts der Gassackhülle einstückig aneinander angeformt sind (so genannter Schmetterlingszuschnitt). D.h., die beiden Gassackteile werden entlang einer Klappachse, die entlang des besagten Randabschnitts verläuft, aufeinander geklappt und die noch nicht miteinander verbundenen Randabschnitte der beiden Gassackteile sodann miteinander unter Ausbildung der Gassackhülle verbunden, wobei jene Verbindung insbesondere durch eine Naht gebildet wird.

In einer Variante der Erfindung wird dabei die besagte Einführöffnung für den Gasgenerator (und das Dichtmittel) durch einen quer zu jenem entlang der Einführrichtung verlaufenden Randabschnitt ausgebildeten Einschnitt gebildet, der den Randabschnitt in einen ersten und einen zweiten Abschnitt unterteilt, wobei der erste Abschnitt zum Innenraum des Gassackes eingeschlagen ist, so dass der Randbereich der Einführöffnung der Gassackhülle durch die nach dem Einschneiden des Randabschnittes der Gassackhülle einander gegenüber liegenden Ränder des Einschnittes gebildet ist, wobei der eingeschlagene erste Abschnitt eine im Querschnitt U-förmige Aufnahme für den Gasgenerator bildet, die unter Zwischenlage des Dichtmittels an dem Gasgenerator anliegt, so dass jener eingeschlagene erste Abschnitt den Gasgenerator quer zur Einführrichtung zumindest abschnittsweise umgreift.

Vorzugsweise ist dabei zum Halten des Gasgenerators eine an der Gassackhülle festgelegte Schlaufe vorgesehen, die der Einführöffnung entlang der Einführrichtung gegenüber liegt, wobei jene Schlaufe zusammen mit dem eingeschlagenen ersten Abschnitt den Gasgenerator sowie das Dichtmittel in einer senkrecht zur Einführrichtung verlaufenden Ebene ringförmig umgreift. Dabei liegen sich die Schlaufe und der besagte eingeschlagene erste Abschnitt quer zur Einführrichtung einander gegenüber, wobei die Schlaufe an einer dem Innenraum des Gassackes abgewandten Oberseite des Gasgenerators anliegt und der eingeschlagene erste Abschnitt an einer dem Innenraum des Gassackes zugewandten Unterseite des Gasgenerators.

Des Weiteren wird das erfindungsgemäße Problem durch ein Verfahren zur Herstellung eines Gassackes insbesondere nach einem der Ansprüche 1 bis 31, gebildet, wobei das erfindungsgemäße Verfahren die Schritte umfasst:
- Bereitstellen einer Gassackhülle des Gassackes, die einen Innenraum des Gassackes umgibt, der zum Aufblasen des Gassackes mit Gas befüllbar ist;
- Einführen eines Dichtmittels in die Einführöffnung, so dass das Dichtmittel über einen mittleren Abschnitt des Dichtmittels an einem die Einführöffnung berandenden Randbereich der Einführöffnung anliegt; und
- Einführen des Gasgenerators in das Dichtmittel derart, dass durch den Gasgenerator bereit zu stellendes Gas in den Innenraum des Gassackes gelangen kann und der die Einführöffnung begrenzende Randbereich den Gasgenerator unter Zwischenlage des mittleren Abschnitts des Dichtmittels ringförmig umgreift, so dass auf den mittleren Abschnitt auftreffendes Gas den mittleren Abschnitt zum Abdichten der Einführöffnung gegen den besagten Randbereich drückt.

Zur Ausbildung des Dichtmittels wird vorzugsweise eine flächige Materiallage bereitgestellt, diese wird bevorzugt entlang einer Wickelrichtung zur Ausbildung des Dichtmittels derart aufgewickelt, dass entlang der Wickelrichtung zumindest zwei Lagen der Materiallage überlappen, und jenes Dichtmittel (Materiallage) wird derart entlang einer quer zur Wickelrichtung orientierten Einführrichtung in die Einführöffnung eingeführt, dass der besagte Randbereich der Einführöffnung den mittleren Abschnitt des Dichtmittels ringförmig umgreift. Die Materiallage wird insbesondere so entlang der Wickelrichtung aufgewickelt, dass das Dichtmittel einen ersten und einen zweiten Randabschnitt aufweist, die über den mittleren Abschnitt miteinander verbunden sind, und zwar vorzugsweise einstückig aneinander angeformt. Dabei werden vorzugsweise am ersten und/oder am zweiten Randabschnitt übereinander liegende Abschnitte der Materiallage so aneinander befestigt, dass sich das Dichtmittel im Bereich der betreffenden Randabschnitte nicht abwickeln kann bzw. im Querschnitt aufweiten kann oder aber einer Aufweitung der Endabschnitte im Querschnitt geringer ausfällt als die Aufweitung des mittleren Abschnittes des Dichtmittels. Hierdurch wird sichergestellt, dass das Dichtmittel bei der Herstellung des Gassackes, insbesondere beim Einführen in die Einführöffnung, seine aufgewickelte Form beibehält.

Vorzugsweise wird der Gasgenerator so bezüglich des mittleren Abschnitts des Dichtmittels angeordnet, dass der mittlere Abschnitt zumindest eine Ausströmöffnung des Gasgenerators gegenüber liegt bzw. das aus dem Gasgenerator austretendes Gas auf den mittleren Abschnitt auftreffen und diesen mit einem Druck beaufschlagen kann, so dass der mittlere Abschnitt zu dem den Gasgenerator umlaufenden Randbereich der Einführöffnung hin gedrängt wird und sich abdichtend an diesen Randbereich anlegen kann.

Weitere Einzelheiten und Vorteile der Erfindung werden bei der nachfolgenden Beschreibung von Ausführungsbeispielen anhand der Figuren deutlich werden.

Es zeigen:
- Fig. 1: eine schematische perspektivische Ansicht eines Dichtmittels eines erfindungsgemäßen Airbagmoduls;
- Fig. 2 - 4: schematische, perspektivische Ansichten einer Abwandlung des in der Figur 1 gezeigten Dichtmittels eines erfindungsgemäßen Airbagmoduls;
- Fig. 5: eine weitere Abwandlung eines Dichtmittels eines erfindungsgemäßen Airbagmoduls;
- Fig. 6: ein trichterförmig ausgebildetes Dichtmittel eines erfindungsgemäßen Airbagmoduls sowie einen Gasgenerator, der in den trichterförmigen Bereich des Dichtmittels eingeführt wird;
- Fig. 7 - 11: schematische, ausschnitthafte und perspektivische Ansichten eines Gassackes eines erfindungsgemäßen Airbagmoduls, wobei die Einführöffnung des Gassackes für den Gasgenerator durch einen Einschnitt in einen Randbereich der Gassackhülle des Gassackes gebildet ist;
- Fig. 12: eine schematische Darstellung einzelner Komponenten eines Baukastens, aus dem eine Airbageinrichtung zum Schutz des Kopfes eines Fahrzeuginsassen zusammengesetzt werden kann;
- Fig.13: ein Beispiel einer aus Komponenten gemäß Figur 12 zusammengesetzten Airbageinrichtung;
- Fig. 14: eine detailliertere Darstellung von Komponenten einer Airbageinrichtung, die zur Bildung einer Kopfschutzvorrichtung zusammengesetzt werden können;
- Fig.15a: ein drittes Ausführungsbeispiel von Komponenten einer Airbageinrichtung, die zu einer Kopfschutzvorrichtung zusammengesetzt werden können;
- Fig. 15b: eine als Kopfschutz dienende Airbageinrichtung aus den Komponenten der Figur 15a;
- Fig.16a: ein viertes Ausführungsbeispiel von Komponenten einer Airbageinrichtung, die zu einer Kopfschutzvorrichtung zusammengesetzt werden können;
- Fig. 16b: eine als Kopfschutz dienende Airbageinrichtung aus den Komponenten der Figur 16a;
- Fig.17a: zwei Module einer als Kopfschutzvorrichtung dienenden Airbageinrichtung, die zusammensteckbar sind;
- Fig. 17b: die Module aus Figur 17a im zusammengesteckten Zustand;
- Fig. 18a: eine Abwandlung der Anordnung aus Figur 17a;
- Fig. 18b: eine Abwandlung der Anordnung aus Figur 17b;
- Fig. 19: ein weiteres Beispiel für das Zusammenstecken zweier Komponenten einer nach einem Baukastenprinzip zusammensetzbaren Airbageinrichtung;
- Fig. 20a-20c: drei Ausführungsbeispiele hinsichtlich der Verwendung von Verbindungsmitteln zum Fügen von Komponenten einer nach einem Baukastensystem zusammensetzbaren Airbageinrichtung;
- Fig. 21a - 21c: ein Ausführungsbeispiel für die Anordnung und Fixierung von Befestigungslaschen an einer Airbageinrichtung;
- Fig. 22a - 22c: eine erste Abwandlung des Ausführungsbeispiels aus den Figuren 21 a bis 21 c;
- Fig. 23a-23d: eine zweite Abwandlung des Ausführungsbeispieles aus den Figuren 21a bis 21c;
- Fig. 24a-24d: eine dritte Abwandlung des Ausführungsbeispieles aus den Figuren 21a bis 21 c;
- Fig. 25: eine als Kopfschutzvorrichtung dienende Airbageinrichtung mit Befestigungslaschen der in den Figuren 21a bis 21c dargestellten Art;
- Fig. 26a-26b: ein weiteres Ausführungsbeispiel für die Anordnung und Fixierung von Befestigungslaschen an einer Airbageinrichtung;
- Fig. 27: ein Beispiel für die Anordnung eines Gasgenerators in einem Verbindungskanal, der zwei aufblasbare Bereiche einer als Kopfschutzvorrichtung dienenden Airbageinrichtung miteinander verbindet;
- Fig. 28a: ein erstes Ausführungsbeispiel eines tonnenförmigen Gasstromverteilers zur Aufteilung des aus einem Gasgenerator der Airbageinrichtung austretenden Gasstromes;
- Fig. 28b: ein zweites Ausführungsbeispiel eines tonnenförmigen Gasstromverteilers zur Aufteilung des aus einem Gasgenerator der Airbageinrichtung austretenden Gasstromes;
- Fig. 29a, 29b: ein erstes Ausführungsbeispiel einer gewickelten Schutzlage zum Schutz des Gewebes eines Verbindungskanals der Airbageinrichtung vor aus einem Gasgenerator ausströmenden heißen Gasen;
- Fig. 30a,30b: die Anordnung aus den Figuren 29a und 29b nach dem Austreten von Gas aus einem Gasgenerator;
- Fig. 31a, 31b: ein zweites Ausführungsbeispiel einer gewickelten Schutzlage zum Schutz des Gewebes eines Verbindungskanals der Airbageinrichtung vor aus einem Gasgenerator ausströmenden heißen Gasen;
- Fig. 32a-32c: eine gleichzeitig als Gasstromverteiler dienende, im Querschnitt ovale Aufnahme für einen Gasgenerator; und
- Fig. 33: einen Querschnitt durch einen Verbindungskanal einer Airbageinrichtung mit einem darin aufgenommenen Gewebeschlauch mit hitzebeständiger Materiallage.

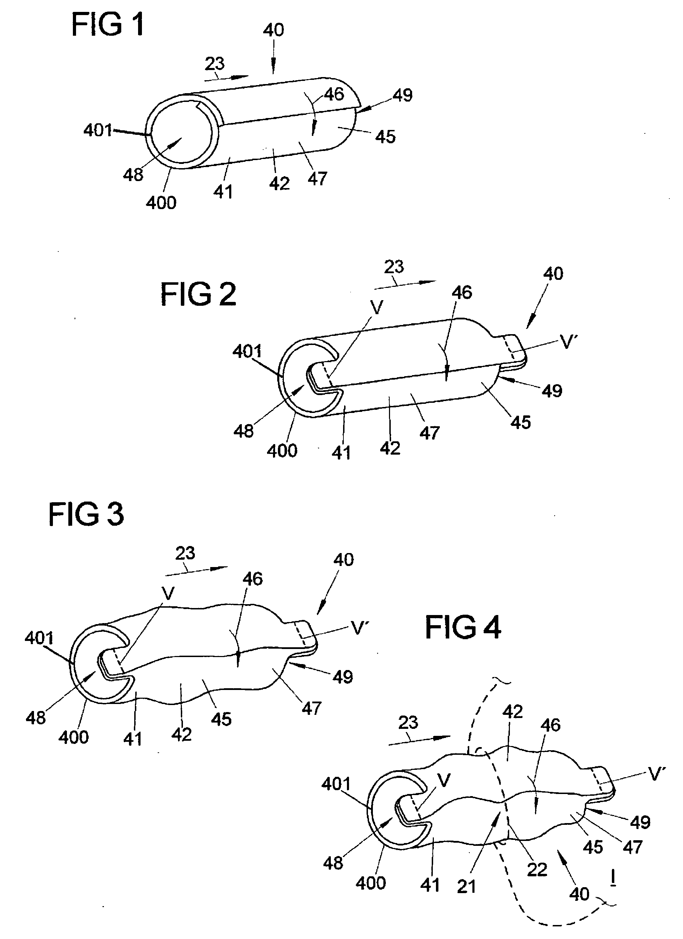

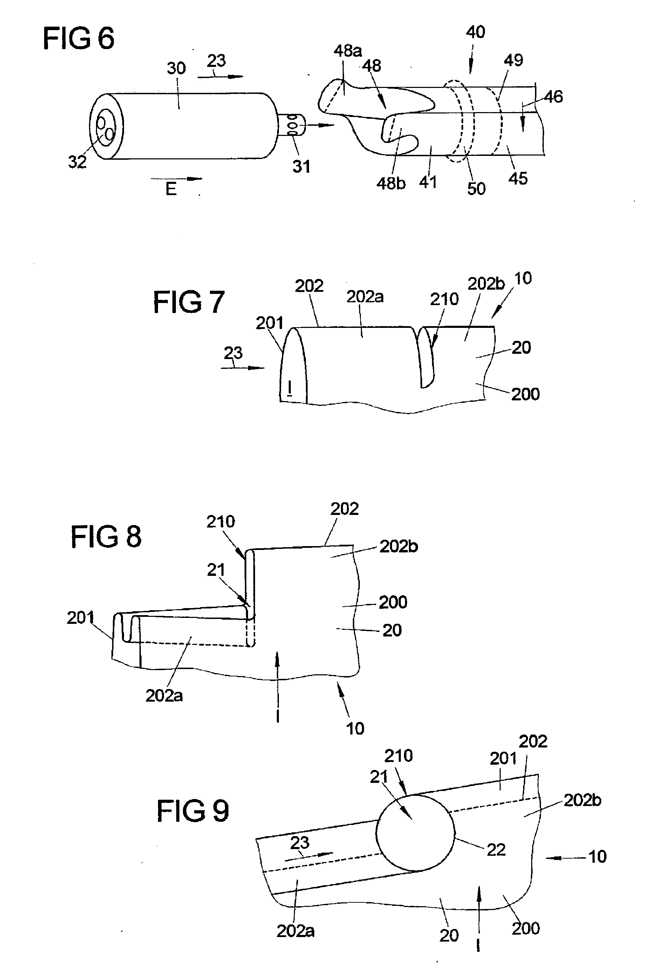

Figur 1 zeigt ein Dichtmittel 40 eines erfindungsgemäßen Airbagmoduls, das zum Abdichten einer Einführöffnung 21 einer Gassackhülle 20 eines Gassackes 10 eingerichtet und vorgesehen ist, wobei jene Einführöffnung 21 der Gassackhülle 20 des Gassackes 10 zum Einführen eines Gasgenerators 30 in einen durch die Gassackhülle 20 definierten Innenraum I des Gassackes 10 dient (vgl. Figuren 4 und 6), wobei jener Gasgenerator 30 entlang einer Einführrichtung 23 in die Einführöffnung eingeführt wird.

Das Dichtmittel 40 besteht aus einer flexiblen Materiallage 45, die aus einem Gassackmaterial gebildet sein kann, aus dem insbesondere auch die Gassackhülle 20 des Gassackes 10 gefertigt sein kann. Diese Materiallage 45 wird ausgehend von einem flach ausgebreiteten Zustand entlang einer Wickelrichtung 46 aufgewickelt, so dass eine insbesondere hohlzylinderförmig ausgeformte Wandung 47 des Dichtmittels 40 gebildet wird, die eine Aufnahme 48 für den Gasgenerator 30 definiert. Dabei wird die Materiallage 45 bevorzugt so entlang der Wickelrichtung 46 aufgewickelt, dass die Materiallage 45 entlang der Wickelrichtung 46 überlappt, und zwar insbesondere derart, dass die Wandung 47 des Dichtmittels 40 entlang ihres entlang der Wickelrichtung 46 umlaufenden Umfangs 49, stets zwei übereinander liegende Lagen 400, 401 der Materiallage 45 aufweist. Die Wandung 47 des Dichtmittels 40 ist somit bevorzugt zweilagig aufgebaut. Die Wandung 47 erstreckt sich des Weiteren entlang der besagten Einführrichtung 23 längs und umläuft quer zu jener Einführrichtung 23, so dass die Aufnahme 48 des Dichtmittels 44 beim Einführen des Dichtmittels 44 in die Einführöffnung 21 entlang der Einführrichtung 23 mit der Einführöffnung 21 fluchtet.

Das Dichtmittel 40 ist entlang der besagten Einführrichtung 23 in drei Abschnitte unterteilt, nämlich einen ersten Endabschnitt 41 und einen zweiten Endabschnitt 43, der den ersten Endabschnitt 41 entlang der Einführrichtung 23 gegenüber liegt, wobei die beiden Endabschnitte 41, 43 über einen mittleren Abschnitt 42 des Dichtmittels 40 miteinander verbunden sind. Entlang jener Einführrichtung 23 ist das Dichtmittel 40 gemäß Figur 4 in die Einführöffnung 21 der Gassackhülle 20 in den Innenraum I des Gassackes 10 eingeführt, so dass ein die Einführöffnung 21 berandender Randbereich 22 der Gassackhülle 20 den mittleren Abschnitt 42 des Dichtmittels 40 ringförmig umgreift. Dabei ist der zweite Endabschnitt 43 des Dichtmittels 40 innerhalb des Innenraums I des Gassackes 10 angeordnet und der erste Endabschnitt 41 des Dichtmittels 40 steht entlang (entgegen) der Einführrichtung 23 aus dem Innenraum I des Gassackes 10 heraus.

Gemäß Figur 6 wird in die Aufnahme 48 des Dichtmittels 40 ein Gasgenerator 30 entlang der Einführrichtung 23 eingeführt, bei dem es sich insbesondere um einen entlang einer Erstreckungsrichtung E längs erstreckten Rohrgasgenerator handelt. Dabei fällt die Erstreckungsrichtung E des Rohrgasgenerators 30 mit der Einführrichtung 23 zusammen. Der Gasgenerator 30 wird nun so entlang der Einführrichtung 23 in die Aufnahme 48 des Dichtmittels 40 eingeführt, dass am Gasgenerator 31 ausgebildete Ausströmöffnungen 31, durch die Gas aus dem Gasgenerator 30 ausströmen kann, in einer senkrecht zur Einführrichtung 23 erstreckten Ebene vom Dichtmittel 40 umgeben sind, oder anders gesagt, die besagten Ausströmöffnungen 31 sind in der Aufnahme 48 des Dichtmittels 40 angeordnet. Stellt nun der Gasgenerator 30 Gas zum Aufblasen des Gassackes 10 bereit, beaufschlagen die aus den Ausströmöffnungen 31 austretenden Gase den mittleren Abschnitt 42 des Dichtmittels 40 entlang quer zur Einführrichtung 23 verlaufender Richtungen, so dass der mittlere Abschnitt 42 vorzugsweise abdichtend gegen den den mittleren Abschnitt 42 umgreifenden Randbereich 22 der Einführöffnung 21 gedrückt wird. Da das Dichtmittel 40 und insbesondere der mittlere Abschnitt 42 des Dichtmittels 40 aus einer aufgewickelten Materiallage 45 bestehen, kann sich der Querschnitt des mittleren Abschnitts 42 in der besagten senkrecht zur Einführrichtung 23 verlaufenden Ebene aufweiten. Dies liegt daran, dass die Lagen 400, 401 der Materiallage 45 im Bereich des mittleren Abschnitts 42 lediglich aneinander anliegen und nicht aneinander befestigt sind. Wird der mittlere Abschnitt 42 des Dichtmittels 40 daher von der Aufnahme 48 her mit einem Druck beaufschlagt (auftretende Gase des Gasgenerators) gleiten die Lagen 400, 401 aneinander in entgegengesetzte Richtungen entlang und zwar unter Aufweitung des besagten Querschnitts des mittleren Abschnitts 42 (so genannter Filmspuleneffekt, vgl. Figur 2).

Damit der aufgewickelte Zustand der Materiallage 45 erhalten bleiben kann, sind die Lagen 400, 401 des Dichtmittels 40 zumindest am ersten Endabschnitt 41 des Dichtmittels 40 mittels einer Verbindung V (insbesondere einer Naht) aneinander festgelegt. Vorzugsweise ist eine solche Verbindung V' auch am zweiten Endabschnitt 43 des Dichtmittels 40 vorgesehen (vgl. Figuren 3 bis 4). Somit kann sich das Dichtmittel 40 nur im Bereich der Einführöffnung 21 im Querschnitt aufweiten, wobei es sich vorzugsweise abdichtend an den Randbereich 22 der Einführöffnung 21 der Gassackhülle 20 anlegt. Das besagte Dichtmittel 40 ist somit selbst abdichtend ausgebildet.

Um das Einführen des Gasgenerators 30 entlang der Einführrichtung 23 bzw. entlang der Erstreckungsrichtung E in die Aufnahme 48 des Dichtmittels 40 zu vereinfachen, ist der erste Endabschnitt 41 des Dichtmittels 40 der in der Figur 6 gezeigten Variante trichterförmig ausgebildet bzw. weist zwei Führungselemente 48a und 48b auf, die einander quer zur Einführrichtung 23 gegenüber liegen und entgegen der Einführrichtung 23 auseinander laufen, so dass eine dem Gasgenerator 30 zugewandte Öffnung der Aufnahme 48 des Dichtmittels 40 effektiv vergrößert ist. Beim Einführen des Gasgenerators 30 in die besagte Öffnung der Aufnahme 48 des ersten Endabschnitts 41 des Dichtmittels 40 wird somit der Gasgenerator 30 durch die besagten Führungselemente 48a, 48b geführt und dabei quer zur Einführrichtung 23 beim Einführen in die Aufnahme 48 bzw. die Einführöffnung 21 der Gassackhülle 20 positioniert.

Das Dichtmittel gemäß Figuren 1 bis 4 ist vorzugsweise über den in den Innenraum I des Gassackes 10 eingeführten zweiten Endabschnitt 43 des Dichtmittels 40 an der Gassackhülle 20 festgelegt, und zwar vorzugsweise mittels einer Nahtverbindung.

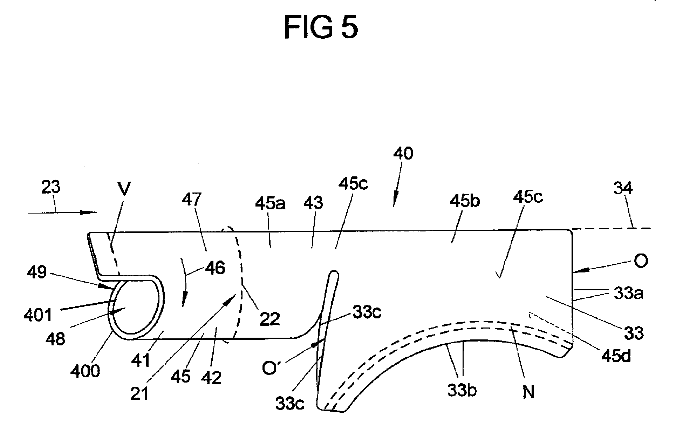

Die Figur 5 zeigt eine Abwandlung des in den Figuren 1 bis 4 gezeigten Dichtmittels 40, bei dem im Unterschied zu den Figuren 1 bis 4 an den zweiten Endabschnitt 43 des Dichtmittels 40 ein Diffusor 33 einstückig angeformt ist, der zum Verteilen durch den Gasgenerator 30 freigesetzte Gase in den Innenraum I des Gassackes 10 dient.

Zur Ausbildung dieses einheitlichen Bauteils wird ein erster Teil 45a der Materiallage 45 wie vorstehend beschrieben aufgewickelt (vgl. Figuren 1 bis 4). Jener erste Teil. 45a der Materiallage 45 ist dabei über eine Materialbrücke 45c einstückig an einen zweiten Teil 45b der Materiallage 45 angeformt, der im Gegensatz zum ersten Teil 45a der Materiallagen 45 nicht aufgewickelt wird, sondern entlang einer entlang der Einführrichtung 23 orientierten Klappachse 34 deckungsgleich aufeinander geklappt wird, so dass jener zweite Teil 45b der Materiallage 45 in zwei deckungsgleich aufeinander geklappten Diffusorteile 45c, 45d unterteilt wird. Diese beiden Diffusorteile 45c, 45d weisen jeweils einen der Klappachse 34 quer zur Einführrichtung 23 gegenüber liegenden Randabschnitt 33b auf, wobei die beiden Diffusorteile 45c, 45d entlang dieses Randabschnittes 33b mittels einer Verbindung N (insbesondere eine Naht) miteinander verbunden sind. Des Weiteren weisen die beiden Diffusorteile 45c, 45d je zwei Randabschnitte 33c, 33a auf, die entlang der Einführrichtung 23 einander gegenüber liegen und jeweils vom Randabschnitt 33b abgehen. Entlang dieser Randabschnitte 33a, 33c sind die beiden Diffusorteile 45c, 45 d nicht miteinander verbunden, so dass diese Randabschnitte 33a, 33c eine erste Öffnung O und eine zweite Öffnung O' des Diffusors 33 definieren bzw. begrenzen, die einander entlang der Einführrichtung 23 gegenüber liegen. Der Diffusor 33 kann somit einen aus dem Gasgenerator 30 austretenden Gasstrom in zwei Gasströme aufteilen, die durch die erste Öffnung O bzw. die zweite Öffnung O' den Diffusor 33 in entgegengesetzte Richtungen verlassen. Damit die beiden Diffusorteile 45c, 45d einfach entlang der Klappachse 34 aufeinander geklappt werden können, ist die Materialbrücke 45c im Vergleich zur Ausdehnung des Teils 45a entlang der Aufwickelrichtung 46 bzw. der Ausdehnung der Diffusorteile 45c, 45d quer zur Einführrichtung 23 (bezogen auf einen flach ausgebreiteten Zustand der beiden Teile 45a, 45b der Materiallage 45) schmal ausgebildet.

Das vorstehend beschriebene Dichtmittel 40 bzw. der Diffusor 33 eignen sich besonders zum Einsatz in einem Seitenairbag bzw. Kopfseitenairbag, bei dem ein aus dem Gasgenerator 30 austretender Gasstrom auf zumindest zwei Kammern verteilt werden muss. Dabei ist eine der beiden Kammern gasleitend mit der ersten Öffnung O des Diffusors 33 und die andere Kammer mit der zweiten Öffnung O' des Diffusors 33 verbunden.

Figur 7 zeigt im Zusammenhang mit den Figuren 8 bis 11 eine Variante einer Einführöffnung 21 eines erfindungsgemäßen Airbagmoduls, die insbesondere für einen Gassack 10 mit so genanntem Schmetterlingszuschnitt geeignet ist. Hierbei weist der Gassack 10 zwei einstückig aneinander angeformte Gassacklagen 200, 201 auf, die entlang einer Klappachse 34, die entlang der besagten einstückigen Verbindung der beiden Gassackteile erstreckt ist, deckungsgleich aufeinander geklappt sind, so dass ein entlang der Einführrichtung 23 erstreckter Randabschnitt 202 der Gassackhülle 20 resultiert, über den die besagten Gassackteile 200, 201 einstückig aneinander angeformt sind. Zur Ausbildung der Gassackhülle 20 sind jene beiden Gassackteile 200, 201 entlang ihrer äußersten Ränder miteinander verbunden.

Um an einem solchen Gassack eine Einführöffnung 21 auszubilden, ist der entlang der Einführrichtung 23 erstreckte Randabschnitt 202 der Gassackhülle 20 quer zur Einführrichtung 23 eingeschnitten, so dass er einen quer zur Einführrichtung 23 erstreckten Einschnitt 210 aufweist.

Dieser Einschnitt 210 unterteilt dabei den Randabschnitt 202 der Gassackhülle 20 in einen ersten Abschnitt 202a und einen zweiten Abschnitt 202b, die einander entlang der Einführrichtung 23 gegenüber liegen. Dabei ist nun der erste Abschnitt 202a quer zur Einführrichtung 23 zum Innenraum I des Gassackes 10 hin eingestülpt, so dass der Einschnitt 210 gemäß den Figuren 8 und 9 einen umlaufenden Randbereich 22 einer Einströmöffnung 21 der Gassackhülle 20 ausbildet. Des Weiteren bildet dabei der eingeschlagene erste Abschnitt 202a des Randabschnittes 202 der Gassackhülle 20 eine im Querschnitt insbesondere U-förmige Aufnahme, die zur Aufnahme des Gasgenerators 30 vorgesehen ist.
In die Einführöffnung 21 kann nun entlang der Einführrichtung 23 ein Dichtmittel 40 gemäß den Figuren 1 bis 4 bzw. 5 eingeführt bzw. angeordnet sein. Dieses ist dann vorzugsweise über den zweiten Endabschnitt 43 des Dichtmittels bzw. den einstückig daran angeformten Diffusor 33 an der Gassackhülle 20 festgelegt und zwar bevorzugt am zweiten (nicht eingeschlagenen) Abschnitt 202b des entlang der Erstreckungsrichtung E bzw. Einführrichtung 23 erstreckten Randabschnitts 202 der Gassackhülle 20.

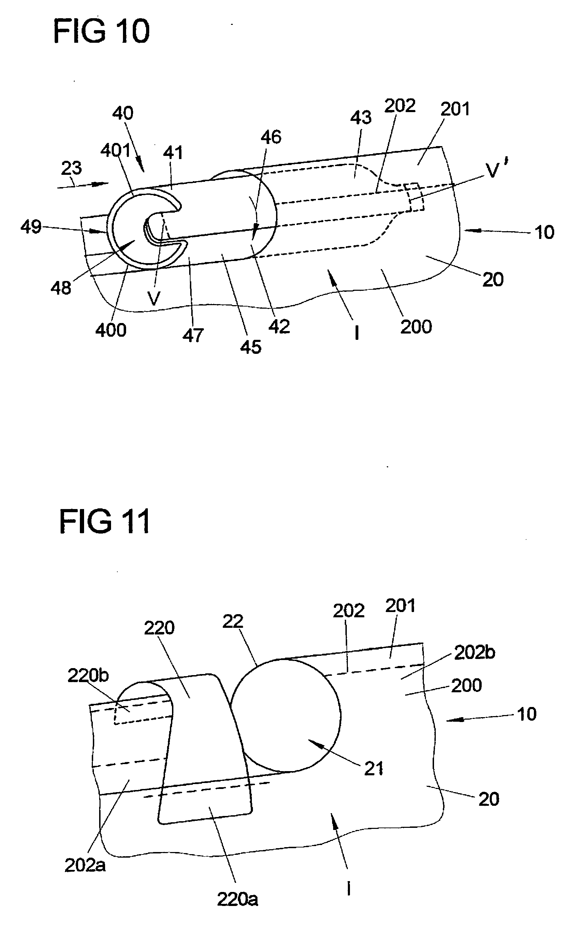

Um den Gasgenerator 30 samt Dichtmittel 40 in der durch den eingeschlagenen ersten Abschnitt 202a gebildeten Aufnahme zu halten, ist eine Schlaufe 220 vorgesehen (vgl. Fig. 11). Jene Schlaufe 220 weist zwei einander gegenüber liegende freie Endbereiche 220a, 220b auf, über die jene Schlaufe 220 an der Gassackhülle 20 festgelegt ist, so dass sie der Einführöffnung 21 der Gassackhülle 20 entlang der Einführrichtung 23 gegenüber liegt und zusammen mit dem eingeschlagenen ersten Abschnitt 202a den Gasgenerator 30 und das Dichtmittel 40 ringförmig umgreift. Hierdurch wird der Gasgenerator 30 sicher bezüglich der Einführöffnung 21 an der Gassackhülle 20 fixiert.

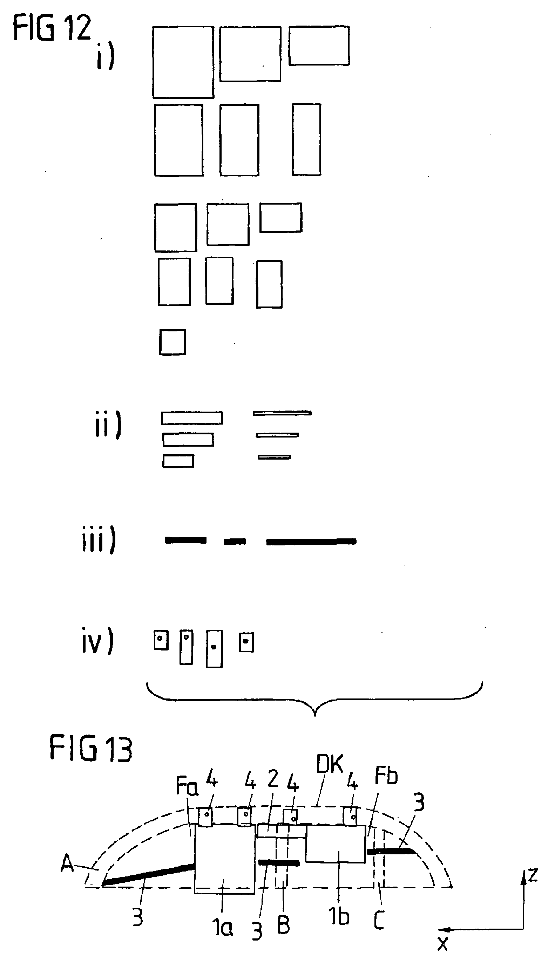

Figur 12 zeigt einen Bausatz aus Komponenten, die zur Herstellung einer Airbageinrichtung in Form einer Kopfschutzeinrichtung für einen Fahrzeuginsassen verwendbar sind.

Unter i) sind dabei Materiallagen (Gassacklagen) unterschiedlicher Größe und Geometrie dargestellt, die zur Herstellung eines aufblasbaren Bereiches der Airbageinrichtung dienen können, der im aufgeblasenen Zustand ein Gaskissen bildet. Bei den Gassacklagen kann es sich insbesondere um Gewebelagen handeln. Aufgrund der rechteckigen Querschnitte der Gassacklagen lassen sich diese mit minimalem Verschnitt aus einer Materialbahn, wie zum Beispiel einer Geweberolle, ausstanzen.

Nach ii) sind unterschiedliche weitere Material- bzw. Gewebelagen dargestellt, die zur Bildung von Verbindungskanälen dienen können, über die benachbarte aufblasbare Bereiche einer Gassackanordnung (strömungs-)verbindbar sind.

Unter iii) sind schließlich mehrere Spannbänder dargestellt, die der Verspannung der Airbageinrichtung dienen können, und die hierzu beispielsweise an unterschiedlichen Elementen der Airbageinrichtung und/oder an einer Fahrzeugstruktur angreifen.

Bildabschnitt iv) zeigt schließlich mehrere Befestigungslaschen, die zur Befestigung einer Airbageinrichtung an einer Kraftfahrzeugstruktur verwendbar sind.

Aus den in Figur 12 dargestellten Komponenten in Form von Materiallagen für aufblasbare Gassackbereiche und für Verbindungskanäle zwischen aufblasbaren Gassackbereichen sowie in Form von Spannbändern und Befestigungslaschen werden zur Herstellung einer bestimmten Airbageinrichtung jeweils diejenigen ausgewählt, die den Anforderungen an eine bestimmte Airbageinrichtung - etwa abhängig vom Fahrzeugtyp, in dem die Airbageinrichtung eingesetzt werden soll - genügen.

Figur 13 zeigt eine Airbageinrichtung in Form einer Kopfschutzvorrichtung, die aus Komponenten der in Figur 12 dargestellten Art zusammengesetzt ist, wobei jene Komponenten zur Bildung einer einheitlichen Airbageinrichtung beispielsweise durch Vernähen und/oder Zusammenstecken miteinander verbunden sind.

Gemäß Figur 13 weist die resultierende Airbageinrichtung zwei aufblasbare Bereiche 1 a, 1b auf, die - bezogen auf den in ein Kraftfahrzeug eingebauten Zustand - entlang der Fahrzeuglängsachse x voneinander beabstandet sind und die über einen Verbindungskanal 2 miteinander in Strömungsverbindung stehen. Die aufblasbaren Bereiche 1 a, 1b sowie der Verbindungskanal 2 der Airbageinrichtung werden dabei gebildet durch Materiallagen der in Figur 12 unter i) und ii) dargestellten Art.

Ferner stehen von den aufblasbaren Bereichen 1 a, 1 b der Airbageinrichtung sowie von deren Verbindungskanal 2 Befestigungslaschen 4 ab, bei denen es sich um von den aufblasbaren Bereichen 1 a, 1b und dem Verbindungskanal 2 separate Elemente handelt, die in geeigneter Weise - wie weiter unten noch näher beschrieben werden wird - an den vorgenannten Komponenten 1 a, 1b, 2 der Airbageinrichtung fixiert sind. Schließlich sind mehrere Spannbänder 3 vorgesehen, von denen eines zur Verbindung der beiden aufblasbaren Bereiche 1 a, 1b der Airbageinrichtung dient und zwei weitere zur Verbindung je eines aufblasbaren Bereiches 1a, 1 b der Airbageinrichtung mit einer Fahrzeugstruktur vorgesehen ist, um die Airbageinrichtung in aufgeblasenem Zustand bezüglich der Fahrzeugstruktur verspannen zu können und hierdurch optimale Bedingungen für das Auffangen eines Fahrzeuginsassen in einem Crash-Fall zu schaffen.

Die in Figur 13 dargestellte Airbageinrichtung wird aus einem Bausatz vorgefertigter Komponenten gebildet, bei denen es sich einerseits um Materiallagen (Gewebelagen) zur Bildung aufblasbarer Bereiche 1 a, 1b sowie von Verbindungskanälen 2 der Airbageinrichtung handelt. Weiterhin sind als hiervon separate Komponenten die Befestigungslaschen 4 und die Spannbänder 3 Bestandteile des zur Herstellung der in Figur 13 gezeigten Airbageinrichtung dienenden Bausatzes.

Anhand Figur 13 wird ferner deutlich, dass sich die beiden aufblasbaren Bereiche 1 a, 1 b der Airbageinrichtung entlang der vertikalen Fahrzeugachse z über eine größere Ausdehnung erstrecken als der zwischen jenen beiden aufblasbaren Bereichen 1 a, 1b liegende Verbindungskanal 2. Hierdurch bilden die beiden aufblasbaren Bereiche 1a, 1b der Airbageinrichtung jeweils ein großflächiges Gaskissen zum Schutz eines Fahrzeuginsassen in einem Crash-Fall, mit dem insbesondere mindestens eine seitliche Fensterscheibe eines Kraftfahrzeugs weitgehend überdeckbar ist. Der Verbindungskanal 2 weist demgegenüber eine deutlich geringere Ausdehnung entlang der vertikalen Fahrzeugachse z auf. Verbindungskanäle 2 sind daher - bezogen auf den in ein Kraftfahrzeug eingebauten Zustand der Airbageinrichtung - vorteilhaft an Stellen positioniert, an denen nicht mit dem Aufprall eines Fahrzeuginsassen zu rechnen ist.

In Figur 13 sind außerdem Teile der seitlichen Struktur eines Kraftfahrzeugs, nämlich zwei seitliche Fensterscheiben Fa, Fb sowie eine A-, B- und C-Säule, in gestrichelten Linien angedeutet, die von der Airbageinrichtung (teilweise) überdeckt werden. Dabei überdecken die aufblasbaren Bereiche 1 a, 1b der Airbageinrichtung solche Teile der seitlichen Karosseriestruktur, also der Fensterscheiben Fa, Fb sowie der A-, B- und C-Säule, mit denen der Kopf eines Fahrzeuginsassen in einem Crash-Fall in Kollision geraten kann.

Konkret bestehen die beiden als voneinander separate, aufblasbare Elemente ausgebildeten aufblasbaren Bereiche 1 a, 1 b der Airbageinrichtung aus Figur 13 jeweils aus zwei Material- bzw. Gewebelagen der in Figur 12 unter i) dargestellten Art, die (zum Beispiel durch Nähte) so miteinander verbunden sind, dass sie jeweils einen mit Gas befüllbaren aufblasbaren Bereich der Airbageinrichtung definieren, wobei die eine Materiallage der seitlichen Fahrzeugstruktur, als den Fensterscheiben Fa, Fb sowie den strukturbildenden Säulen A, B, C, zugewandt ist und die andere gegenüber liegende Materiallage dem Fahrzeuginnenraum, also insbesondere einem zu schützenden Fahrzeuginsassen, zugewandt ist.

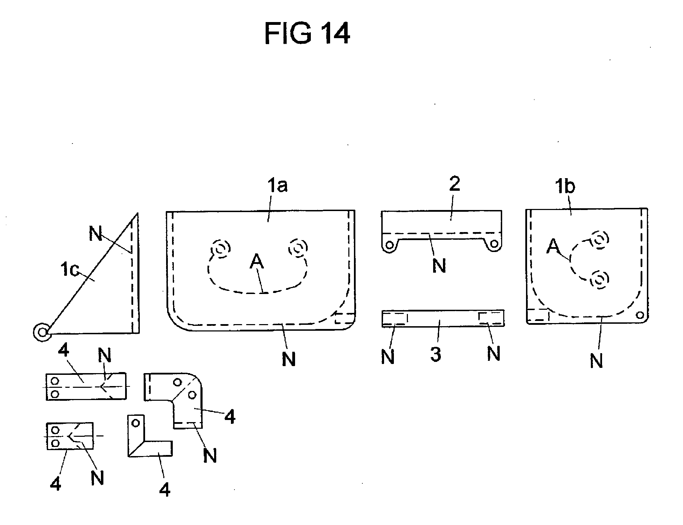

Figur 14 zeigt eine Anordnung gemäß Figur 13 in etwas detaillierterer Darstellung. Hier sind an den die Gassackbereiche 1 a, 1b bildenden aufblasbaren Elementen sowie an dem Verbindungskanal 2, einem Spannband 3 und an den Befestigungslaschen 4 jeweils Nähte N erkennbar, die der Befestigung der einzelnen Komponenten 1a, 1b, 2, 3, 4 der Airbageinrichtung untereinander dienen können.

Die Nähte N an den aufblasbaren Bereichen 1 a, 1b sowie am Verbindungskanal 2 dienen dabei auch dazu, Material- bzw. Gewebelagen miteinander zu verbinden, aus denen der jeweilige aufblasbaren Bereich 1 a, 1 b bzw. der Verbindungskanal 2 besteht. Typischerweise sind dies zwei Gewebelagen, von denen die eine - bezogen auf den in ein Kraftfahrzeug eingebauten Zustand der Airbageinrichtung - der seitlichen Karosseriestruktur eines Kraftfahrzeugs, also insbesondere einer Fensterscheibe und/oder einer der strukturbildenden Säulen, zugewandt ist und von denen die andere dem Fahrzeuginnenraum, und somit insbesondere dem Kopf eines zu schützenden Fahrzeuginsassen, zugeordnet ist.

Weiterhin sind in Figur 14 Abnäher A erkennbar, entlang derer die beiden Material- bzw. Gewebelagen, welche die aufblasbaren Bereiche 1a, 1b der Airbageinrichtung bilden, zur Bildung von Einschnürungen miteinander verbunden sind. Hiermit wird der jeweilige aufblasbare Bereich 1 a, 1 b im aufgeblasenen Zustand so strukturiert, dass ein optimaler Schutz eines Fahrzeuginsassen gewährleistet ist.

Außerdem ist gemäß Figur 14 ein zusätzlicher (dritter, nicht aufblasbarer) Bereich 1c (in Form eines Segels) vorgesehen, der aus dreieckförmigem Material- bzw. Gewebezuschnitten gebildet ist und sich daher insbesondere zum Überdecken eines Dreiecksfensters eines Kraftfahrzeugs eignet.

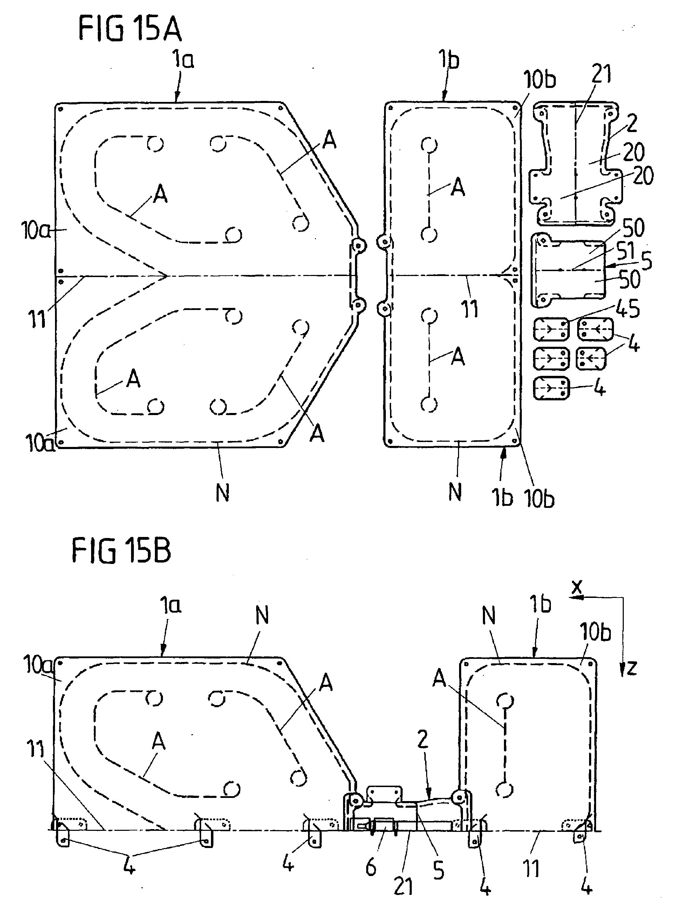

In solchen Darstellungen, in denen die Komponenten der Airbageinrichtung im nicht zusammengefügten Zustand gezeigt sind, wie zum Beispiel der vorstehend beschriebenen Figur 14, der Figur 15a und der Figur 16a, weisen die dort gezeigten Abnäher A und Nähte N jeweils auf die Stellen hin, an denen sich nach dem Fügen der einzelnen Komponenten der Airbageinrichtung die entsprechenden Abnäher A und Nähte N befinden werden. Diese sind in dem in den Figuren 14, 15 a und 16a gezeigten Zustand noch nicht an den einzelnen Komponenten der Airbageinrichtung vorhanden.

In den Figuren 15a und 15b ist ein weiteres Ausführungsbeispiel einer als Kopfschutz dienenden Airbageinrichtung dargestellt, wobei in Figur 15a die Bestandteile jener Airbageinrichtung einzeln gezeigt sind und Figur 15b die Airbageinrichtung in zusammengebautem Zustand zeigt.

Eine Besonderheit der in den Figuren 15a und 15b dargestellten Anordnung liegt darin, dass einteilige Materialzuschnitte (insbesondere einteilige Gewebezuschnitte), welche aufblasbare Gassackbereiche 1a, 1b, einen Verbindungskanal 2 zwischen jenen Gassackbereichen 1a, 1b sowie eine Aufnahme 5 für einen Gasgenerator 6 bilden, jeweils in einem Schmetterlings-Design ausgeführt sind. Das heißt, die einzelnen Zuschnitte umfassen jeweils zwei Materiallagen bzw. genauer Gewebelagen 10a, 10b, 20 bzw. 50, die im Wesentlichen identisch, nämlich spiegelsymmetrisch bezüglich einer Symmetrieachse 11, 21 bzw. 51, ausgeführt sind, entlang der die beiden Lagen 10a, 10b, 20, 50 miteinander verbunden sind. Die beiden Materiallagen bilden also im jeweiligen Materialzuschnitt quasi die Flügel eines Schmetterlings, die entlang der jeweiligen Symmetrieachse 11, 21, 51 einstückig miteinander ausgebildet sind.

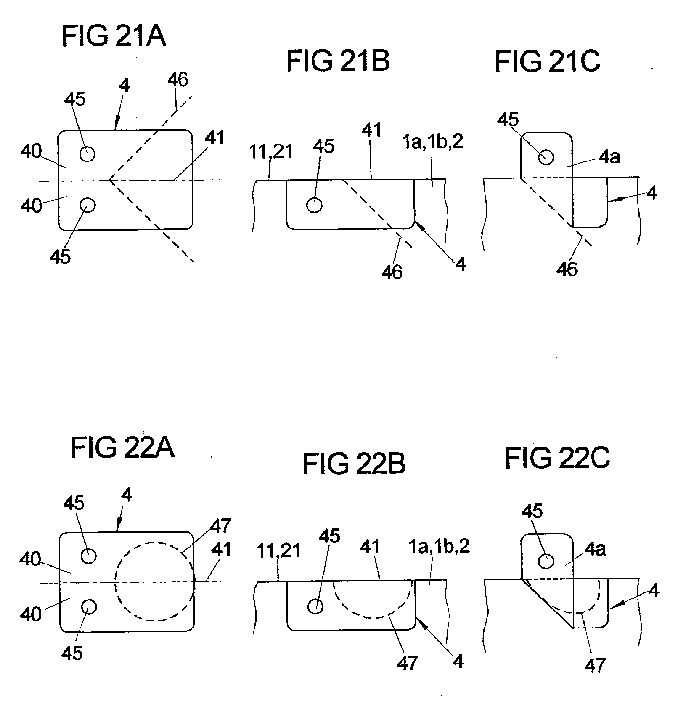

Auch Befestigungslaschen 4, die zur Befestigung der Airbageinrichtung an einer Fahrzeugstruktur, insbesondere im Dachkantenbereich vorgesehen sind, werden hier spiegelsymmetrisch ausgebildet. Weitere Einzelheiten zu jenen jeweils mindestens eine Befestigungsöffnung 45 aufweisenden Befestigungslaschen 4 werden weiter unten anhand der Figuren 21a bis 26b beschrieben werden.

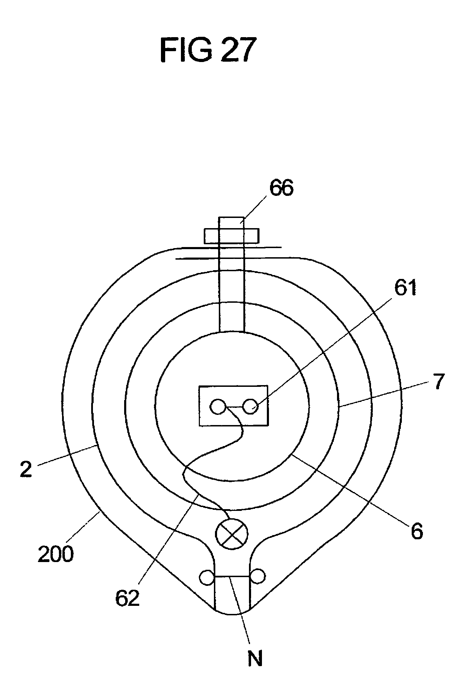

Wie anhand Figur 15b deutlich wird, ist ein Gasgenerator 6, der zum Aufblasen der beiden entlang der Fahrzeuglängsachse x voneinander beabstandeten aufblasbaren Bereiche 1 a, 1b der Airbageinrichtung dient, hier unter Verwendung einer flexiblen Aufnahme 5 im Verbindungskanal 2 angeordnet, der die beiden aufblasbaren Bereiche 1a, 1b gasleitend miteinander verbindet. Einzelheiten zur Anordnung eines Gasgenerators 6 in der Airbageinrichtung, insbesondere in einem Verbindungskanal 2 der Airbageinrichtung, sind in den Figuren 27 bis 33 dargestellt und werden weiter unten anhand dieser erläutert werden.

Wie anhand einer Zusammenschau der Figuren 15a und 15b erkennbar ist, werden die die aufblasbaren Bereiche 1 a, 1b sowie den Verbindungskanal 2 bildenden Material- bzw. Gewebezuschnitte einmal um ihre jeweilige Symmetrieachse als Faltlinie 11 bzw. 21 umgeschlagen und anschließend unter der Bildung von Nähten N entlang ihres äußeren Randes miteinander vernäht, so dass sich zwei aufblasbare Bereiche 1a, 1b sowie ein diese beiden (strömungs-)verbindender Verbindungskanal 2 ergeben.

Die Symmetrieachsen bzw. Faltlinien 11, 21 erstrecken sich dabei entlang der seitlichen Dachkante DK, vergleiche Figur 13, eines Kraftfahrzeugs, wenn die in den Figuren 15a und 15b gezeigte Airbageinrichtung in ein solches eingebaut ist. Dementsprechend sind (in einer weiter unten anhand der Figuren 21a bis 26b näher beschriebenen Weise) im Bereich jener Symmetrieachsen bzw. Faltlinien 11, 21 an den aufblasbaren Bereichen 1 a, 1b sowie gegebenenfalls an dem Verbindungskanal 2 die Befestigungslaschen 4 fixiert, über die eine Befestigung der Airbageinrichtung am Kraftfahrzeug, insbesondere am seitlichen Dachkantenbereich eines Kraftfahrzeugs erfolgt.

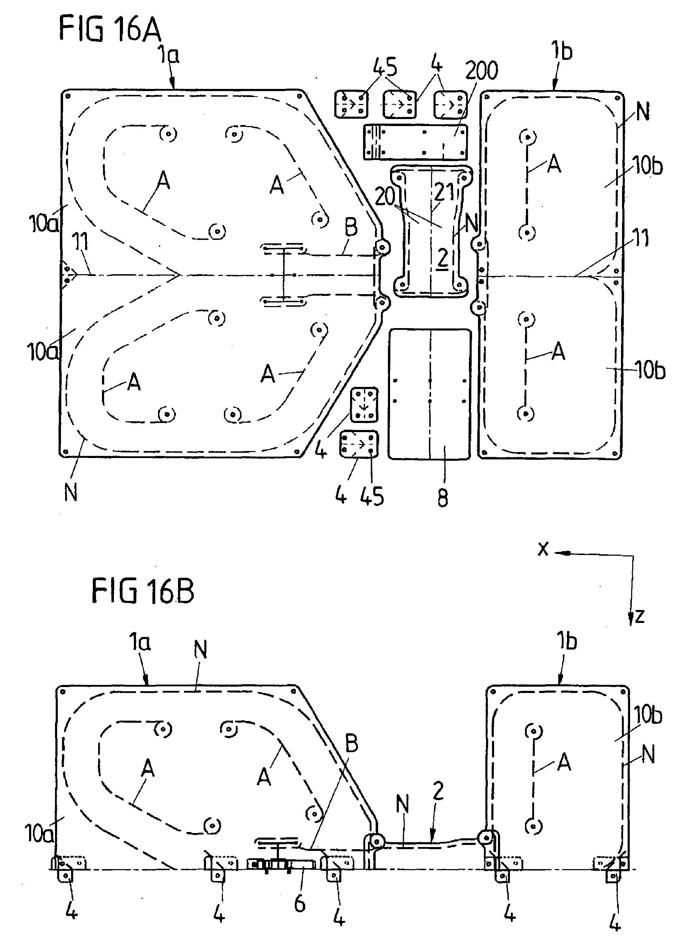

In den Figuren 16a und 16b ist eine Abwandlung des Ausführungsbeispieles aus den Figuren 15a und 15b dargestellt, wobei der wesentliche Unterschied darin besteht, dass ein zum Aufblasen der beiden voneinander beabstandeten aufblasbaren Bereiche 1 a, 1b der Airbageinrichtung dienender Gasgenerator 6 nicht im Verbindungskanal 2, sondern in einem der beiden aufblasbaren Bereiche 1a, 1b angeordnet ist. Hierzu ist in jenem aufblasbaren Bereich 1a mittels einer Begrenzungsnaht B ein Raum zur Aufnahme des Gasgenerators 6 gebildet.

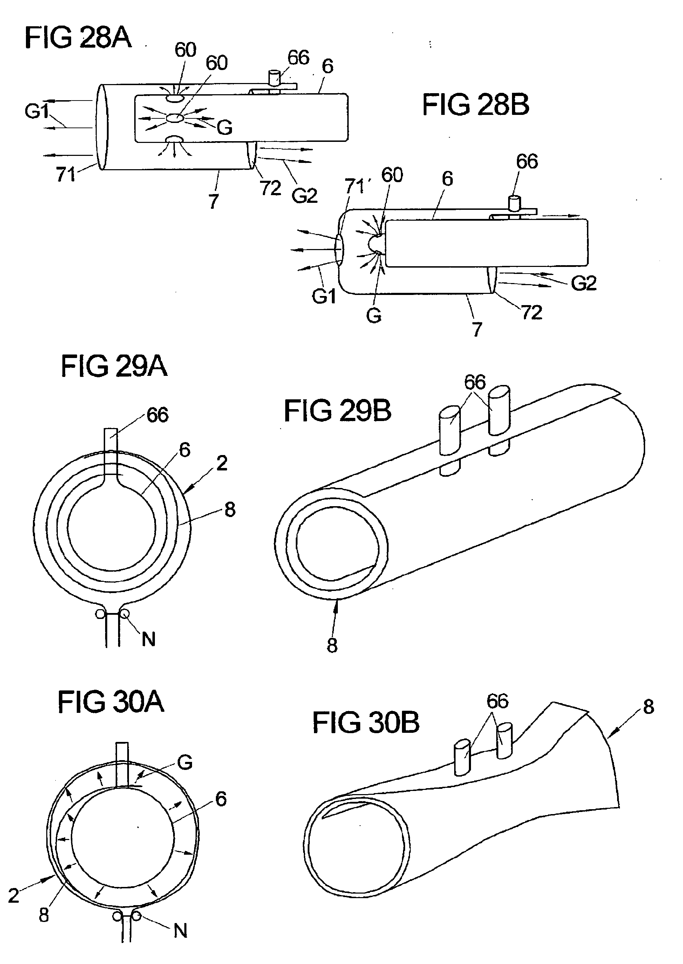

Weiterhin sind in Figur 16a ein Schutzlagenwickel 8 für den Gasgenerator 6 und eine Bandage 200, jeweils im flach ausgebreiteten Zustand, erkennbar, deren Funktion weiter unten anhand der Figuren 29a bis 31b bzw. 27 näher erläutert werden wird.

Sowohl bei der in den Figuren 15a und 15b als auch bei der in den Figuren 16a und 16b gezeigten Airbageinrichtung können die beiden aufblasbaren Bereiche 1a, 1b der Airbageinrichtung sowie der Verbindungskanal 2 jeweils separat aus einem jeweiligen Material- bzw. Gewebezuschnitt hergestellt werden, indem dieser um die hierfür vorgesehene Achse bzw. Faltlinie geklappt und anschließend die beiden resultierenden, einander gegenüber liegende Materiallagen 10a, 10b bzw. 20 miteinander vernäht oder in sonstiger Weise miteinander verbunden werden, um einen aufblasbaren Gassackbereich bzw. einen Verbindungskanal zu schaffen. Dabei ist unter Fertigungsgesichtspunkten die Verwendung möglichst gerader Nähte vorteilhaft. Anschließend werden diese vorgefertigten Komponenten der Airbageinrichtung miteinander verbunden, zum Beispiel durch Nähen oder auch in sonstiger nachfolgend näher zu beschreibender Art und Weise.

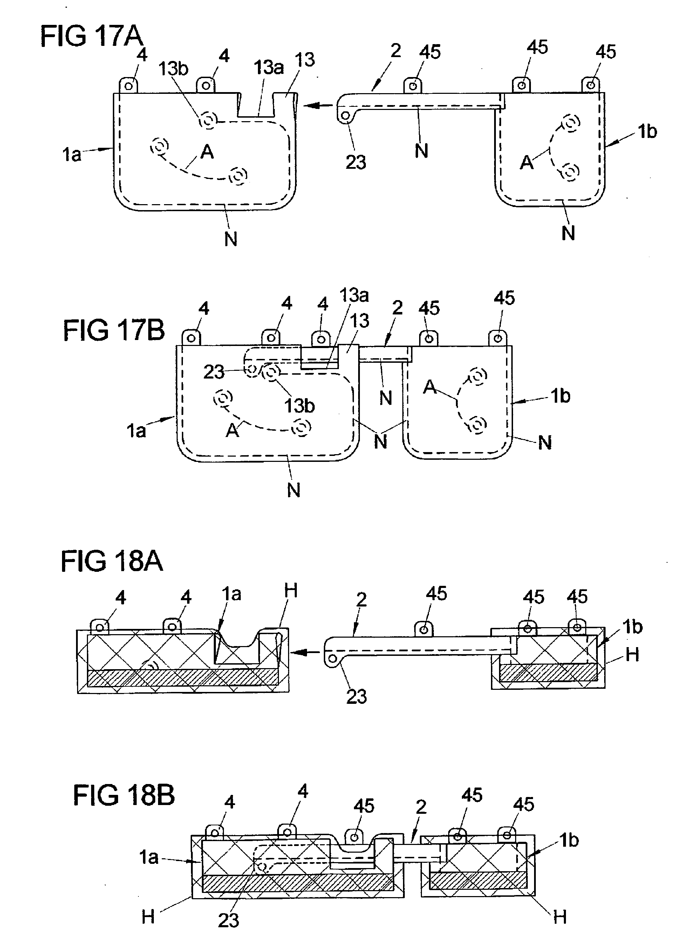

So zeigt Figur 17a eine Anordnung, bei der einerseits ein vorderer aufblasbarer Bereich 1a der Airbageinrichtung sowie andererseits ein hinterer aufblasbarer Bereich 1b der Airbageinrichtung zusammen mit einem zugehörigen Verbindungskanal 2 jeweils ein Modul bilden, das einschließlich hieran fixierter Befestigungslaschen 4 sowie zur Schaffung von Einschnürungen vorgesehener Abnäher A komplett vorgefertigt ist. Diese beiden Module werden anschließend dadurch formschlüssig miteinander verbunden, dass der Verbindungskanal 2 durch eine Schlaufe 13 und eine dahinter gelegene Ausnehmung 13a des ersten aufblasbaren Bereiches 1a geführt wird und mit einer Verbreiterung 23 an seinem vorderen Ende einen hierfür vorgesehenen (ringförmig geschlossenen) Abnäher 13b des ersten aufblasbaren Bereiches 1a hintergreift, vergleiche Figur 17b. Die Schlaufe 13 am ersten aufblasbaren Bereich 1a der Airbageinrichtung dient dabei im fertig montierten Zustand zur definierten Positionierung des Verbindungskanals 2 sowie des ersten aufblasbaren Bereiches 1a zueinander. Zusätzlich können der erste aufblasbare Bereich 1a und der Verbindungskanal 2 über Nähte oder sonstige Verbindungsmittel miteinander verbunden werden.

In den Figuren 18a und 18b ist eine Abwandlung der Anordnung aus den Figuren 17a und 17b dargestellt, wobei der wesentliche Unterschied darin besteht, dass die aufblasbaren Bereiche 1a, 1b der beiden Module jeweils bereits zu einem (länglichen) Gassackpaket zusammengefaltet und als gefaltetes Gassackpaket in einer (schlauchartigen) Schutzhülle H angeordnet werden, bevor eine Verbindung der beiden Module über den in das zweite Modul integrierten Verbindungskanal 2 erfolgt, vergleiche den Übergang von Figur 18a zu Figur 18b.

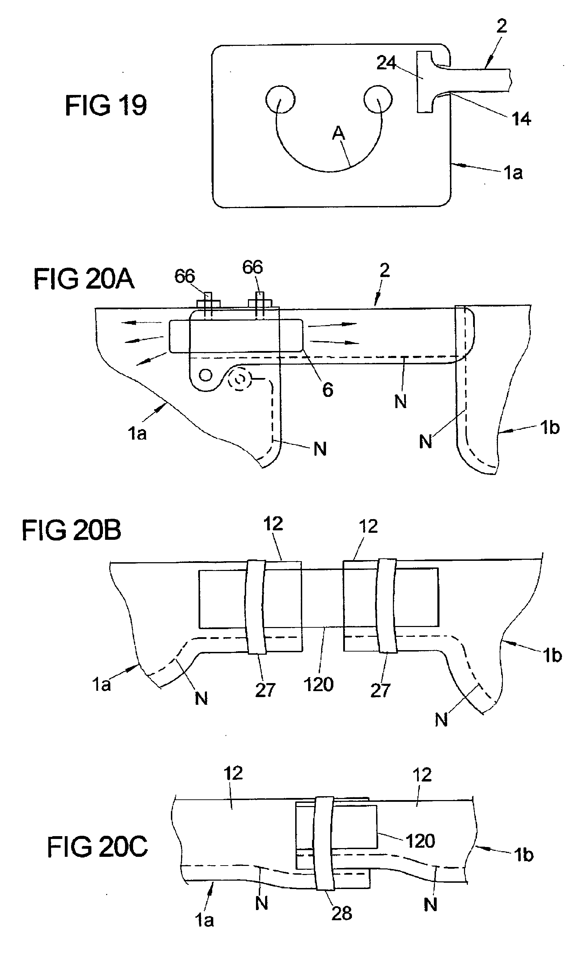

Figur 19 zeigt schließlich eine weitere Möglichkeit zur formschlüssigen Anordnung eines Verbindungskanals 2 an einem aufblasbaren Bereich 1a einer Airbageinrichtung, wobei hier der Verbindungskanal 2 mit einem verbreiterten Endabschnitt 24 den Rand einer Durchgangsöffnung 14 des aufblasbaren Bereiches 1a hintergreift, die von jenem Verbindungskanal 2 durchgriffen wird.

In den Figuren 20a bis 20c sind weitere Varianten zur Verbindung von Komponenten einer Airbageinrichtung dargestellt.

Gemäß Figur 20a stehen von einem Gasgenerator 6 Befestigungsbolzen 66 ab, die jeweils eine Befestigungsöffnung in einem ersten aufblasbaren Bereich 1a der Airbageinrichtung sowie in einem Verbindungskanal 2 der Airbageinrichtung durchgreifen, welcher mit einem zweiten aufblasbaren Bereich 1 b zu einem Modul zusammengefasst ist. Unter Verwendung von auf die Befestigungsbolzen geschraubten Muttern erfolgt eine Verbindung zwischen dem ersten aufblasbaren Bereich 1a und dem Verbindungskanal 2 und somit dem gesamten den Verbindungskanal 2 umfassenden Modul im Bereich des Gasgenerators 6.

Gemäß den Figuren 20b und 20c weisen zwei voneinander beabstandet angeordnete aufblasbare Bereiche 1 a, 1 b einer Airbageinrichtung jeweils einen Verbindungsabschnitt 12 auf, der jeweils auf den anderen der beiden aufblasbaren Bereiche 1 a, 1 b gerichtet ist. Diese beiden Verbindungsabschnitte 12 bilden gemeinsam einen Verbindungsbereich, über den die beiden aufblasbaren Bereiche 1a, 1b unter zusätzlicher Verwendung eines Verbindungsrohres 120 miteinander in Verbindung, genauer in Strömungsverbindung, stehen. Das Verbindungsrohr 120 ist dabei in jenem Verbindungsbereich der Airbageinrichtung angeordnet.

Beide Verbindungsabschnitte 12 sind mit dem Verbindungsrohr 120 mittels eines ringförmigen Befestigungselementes 27 bzw. 28 verbunden, welches das Verbindungsrohr 120 unter Zwischenlage mindestens eines der Verbindungsabschnitte 12 ringförmig umgreift und hierdurch den jeweiligen Verbindungsabschnitt 12 am Verbindungsrohr 120 festlegt.

Bei dem in Figur 20b gezeigten Ausführungsbeispiel ist dabei jedem der Verbindungsabschnitte 12 ein eigener Befestigungsring 27 zugeordnet, während bei dem in Figur 20c gezeigten Ausführungsbeispiel ein einzelner Befestigungsring 28 beide Verbindungsabschnitte 12 am Verbindungsrohr 120 festlegt.

In den Figuren 21a bis 21c ist ein erstes Ausführungsbeispiel von Befestigungslaschen 4 dargestellt, die zur Befestigung einer Airbageinrichtung der anhand der Figuren 12 bis 18b dargestellten Art an der Struktur eines Kraftfahrzeugs dienen können.

Gemäß den Figuren 21a bis 21c sind die Befestigungslaschen 4 jeweils zweilagig ausgeführt, wobei die beiden (spiegelsymmetrisch zueinander ausgeführten) Materiallagen 40 einer jeweiligen Befestigungslasche 4 (zum Beispiel in Form von Gewebelagen) nach dem Schmetterlings-Prinzip entlang einer Symmetrieachse bzw. Faltlinie 41 einstückig miteinander verbunden sind, so dass die zweilagigen Befestigungslaschen 4 jeweils einteilig ausgeführt sind.

Eine jeweilige Befestigungslasche 4 wird in der Weise an einer zugeordneten Komponente der Airbageinrichtung, zum Beispiel an einem der aufblasbaren Bereiche 1 a, 1b oder an einem Verbindungskanal 2 fixiert, dass jede der beiden Lagen 40 einer Befestigungslasche 4 mit jeweils einer Lage 10a, 10b oder 20 der entsprechenden Komponente 1 a, 1 b, 2 verbunden wird, vergleiche Figuren 15a und 16a.

Die Fixierung einer jeweiligen Lage 40 der Befestigungslasche 4 an einer Lage der zugeordneten Komponente 1a, 1b oder 2 der Airbageinrichtung erfolgt dabei über eine Naht 46, die im Ausführungsbeispiel der Figuren 21a bis 21c schräg (zum Beispiel unter einem Winkel von 45°) zu der Symmetrieachse bzw. Faltlinie 11, 21 der jeweils zugeordneten Komponente 1a, 1b, 2 der Airbageinrichtung verläuft. Nach Herstellung jener Verbindungsnaht 46 zur Verbindung einer jeweiligen Materiallage 40 der Befestigungslasche 4 mit einer zugeordneten Materiallage 10a, 10b, 20 einer Komponente 1 a, 1b, 2 der Airbageinrichtung wird jede der beiden Materiallagen 40 der Befestigungslasche 4 mit einem freien Endabschnitt (Befestigungsabschnitt) um jene schräg verlaufende Verbindungsnaht 46 geklappt, so dass die Lagen 40 mit einem freien Ende jeweils oberhalb der Symmetrieachse bzw. Faltlinie 11, 21 der zugeordneten Komponente 1a, 1b oder 2 der Airbageinrichtung positioniert sind.

Die als Befestigungsabschnitte dienenden freien Endabschnitte einer Befestigungslasche 4 sind jeweils mit einer Befestigungsöffnung 45 versehen, wobei die Befestigungsöffnungen 45 der beiden Lagen 40 im um die Naht 46 geklappten Zustand einander überdecken bzw. miteinander fluchten, so dass sie eine durchgehende Befestigungsöffnung zur Befestigung an einer Kraftfahrzeugstruktur, zum Beispiel mittels Schrauben oder Nieten, bilden.

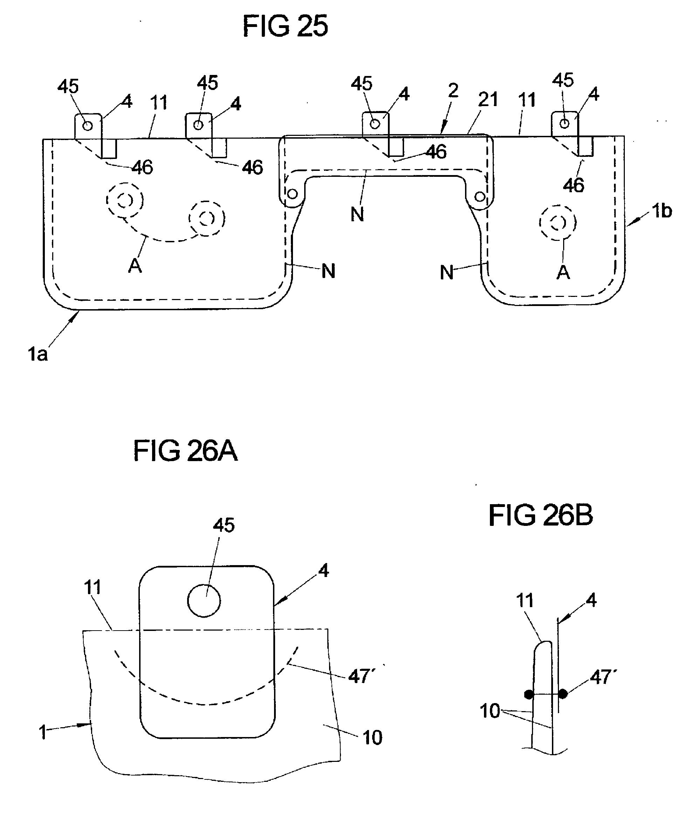

Figur 25 zeigt die Anwendung von Befestigungslaschen 4 der in den Figuren 21a bis 21c dargestellten Art auf eine Airbageinrichtung, die zwei voneinander beabstandete aufblasbare Bereiche 1a, 1b aufweist und einen die beiden aufblasbaren Bereiche 1 a, 1b verbindenden Verbindungskanal 2. Befestigungslaschen 4 der vorstehend beschriebenen Art sind dabei sowohl an den beiden aufblasbaren Bereichen 1 a, 1 b als auch am Verbindungskanal 2 vorgesehen, und zwar jeweils im Bereich einer oberen Kante der jeweiligen Komponente 1 a, 1b, 2, die hier wiederum beispielhaft durch eine Symmetrieachse bzw. Faltlinie 11, 21 gebildet wird.

In den Figuren 22a bis 22c ist eine Abwandlung der Anordnung aus den Figuren 21 a bis 21c dargestellt, wobei der Unterschied darin besteht, dass gemäß den Figuren 22a bis 22c die Naht 47, über die die Befestigungslasche 4 an einer zugeordneten Komponente 1 a, 1 b oder 2 einer Airbageinrichtung befestigt wird, als gekrümmte Naht, hier konkret als eine bogenförmig entlang einer Kreisbahn verlaufende Naht, ausgebildet ist. Hierdurch lassen sich unterschiedliche Klappwinkel der freien Endabschnitte der beiden Materiallagen 40 der Befestigungslasche 4 realisieren, je nachdem, um welchen Bereich der Befestigungsnaht 47 die freien Endabschnitte geklappt werden.

Sofern es sich bei der Komponente 1 a, 1b, 2 der Airbageinrichtung, der eine jeweilige Befestigungslasche 4 zugeordnet ist, nicht um eine nach dem Schmetterlingsprinzip ausgeführte Komponente mit Symmetrieachse bzw. Faltlinie handeln sollte, wird die jeweilige Befestigungslasche 4 vorteilhaft allgemein im Bereich der oberen Randes/der oberen Kante der entsprechenden Komponente 1 a, 1b, 2 angebracht, welcher der Dachkante eines Kraftfahrzeugs zugeordnet ist; und die entsprechenden Nähte 46, 47 verlaufen dann schräg bzw. gekrümmt bezüglich der oberen Kante der jeweiligen Komponente 1a, 1b, 2 (die im vorliegenden Ausführungsbeispiel der Figuren 21a bis 21c bzw. 22a bis 22c speziell durch eine Symmetrieachse bzw. Faltlinie 11, 21 gebildet wird). Allgemein kann es sich aber um eine beliebige obere Kante einer als Kopfschutzvorrichtung dienenden Airbageinrichtung handeln, die dem Dachkantenbereich eines Kraftfahrzeugs zugeordnet ist.

Selbstverständlich können die Befestigungslaschen 4 auch an anderen Bereichen einer Airbageinrichtung vorgesehen sein, also etwa an seitlichen Kanten oder auch an einer unteren Kante, die dem Fahrzeugboden zugewandt ist und beispielsweise im eingebauten Zustand der Airbageinrichtung im Bereich der Türbrüstung einer Kraftfahrzeugtür liegt.

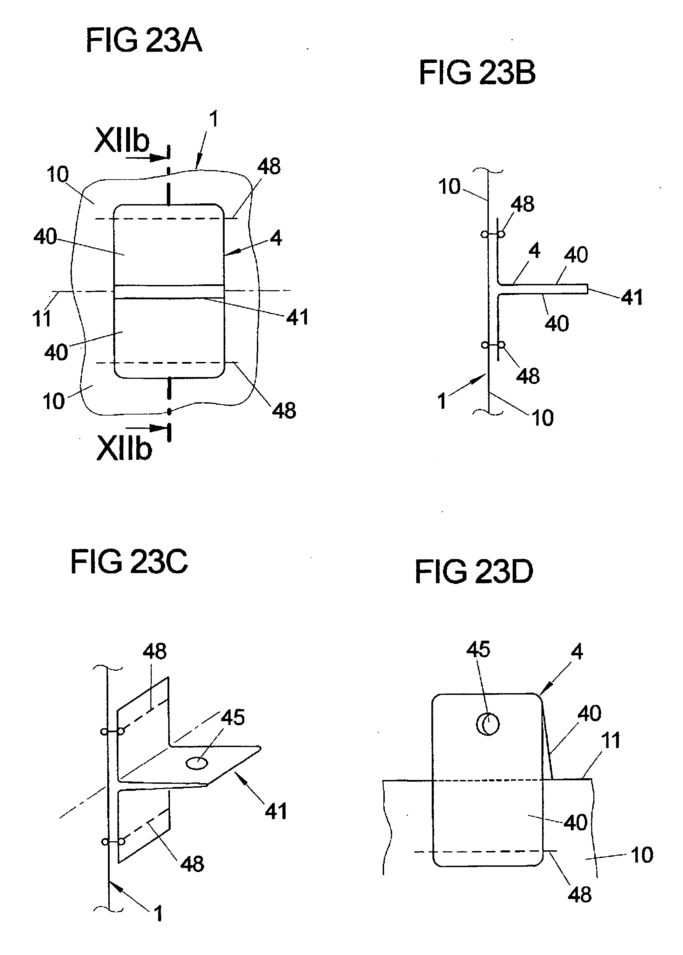

In den Figuren 23a bis 23d ist eine Variante einer Befestigungslasche 4 dargestellt, die mittels parallel zur oberen Kante 11 (zum Beispiel in Form einer Symmetrieachse bzw. Faltlinie) eines aufblasbaren Bereiches 1 oder einer sonstigen Komponente einer Airbageinrichtung verlaufender Nähte 48 an dieser fixiert ist, und zwar in der Weise, dass je eine Lage 40 der einstückigen, zweilagigen Befestigungslasche 4 an jeweils einer Materiallage der zugeordneten Komponente 1 der Airbageinrichtung fixiert wird. Dabei bildet die Befestigungslasche 4 im fixierten Zustand eine Schlaufe mit einer Befestigungsöffnung 45, über die eine Befestigung an einer Fahrzeugstruktur erfolgen kann, zum Beispiel mittels Befestigungsbolzen, Schrauben oder Nieten.

Im Unterschied zu den anhand der Figuren 21a bis 21c sowie 22a bis 22c dargestellten Befestigungslaschen erfolgt hier kein Umklappen freier Endabschnitte der Befestigungslasche 4, um diese in ihre Funktionsposition zu bringen; sondern die Befestigungslasche 4 aus den Figuren 23a bis 23d weist unmittelbar nach ihrer Fixierung an einer zugeordneten Komponente 1 einer Airbageinrichtung in jeder ihrer beiden Lagen 40 jeweils einen über die obere Kante 11 jener Komponente 1 hinausragenden Befestigungsabschnitt mit Befestigungsöffnung 45 auf, welcher u.a. durch die Faltlinie 41 der Befestigungslasche 4 begrenzt ist.

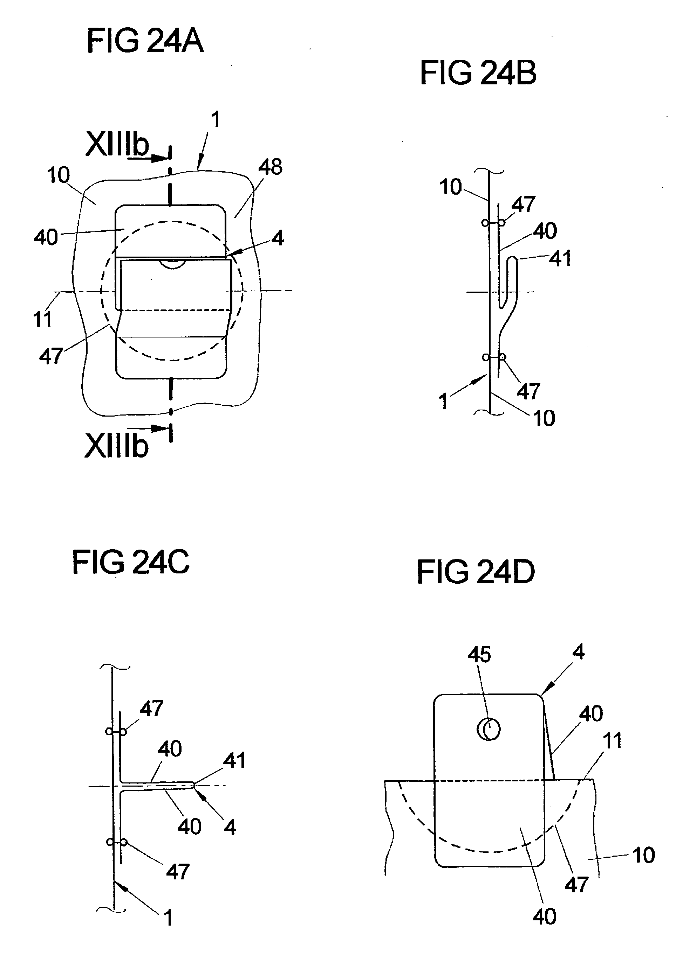

In den Figuren 24a bis 24d ist eine Abwandlung der Anordnung aus den Figuren 23a bis 23d gezeigt, wobei der wesentliche Unterschied darin besteht, dass zur Befestigung der Befestigungslasche 4 in Form einer Befestigungsschlaufe gekrümmte Nähte, hier in Form bogenförmiger, entlang einer Kreisbahn verlaufender Nähte, verwendet werden.

In den Figuren 26a und 26b ist schließlich noch eine einseitig fixierte, insbesondere angenähte, Befestigungslasche 4 dargestellt, die im Bereich der oberen Kante 11 einer (zweilagigen) Komponente 1 einer Airbageinrichtung an jener Komponente 1 befestigt wird, und zwar unter Verwendung einer Naht 47', die gleichzeitig zwei Lagen 10 jener Komponente 1 der Airbageinrichtung miteinander verbindet und hierdurch eine Einschnürung in jener Komponente 1 definiert. Die Befestigungslasche 4 kann hier nach dem Umschlagen und gegebenenfalls Falten der einen aufblasbaren Gassackbereich bildenden Komponente 1 gefügt werden.

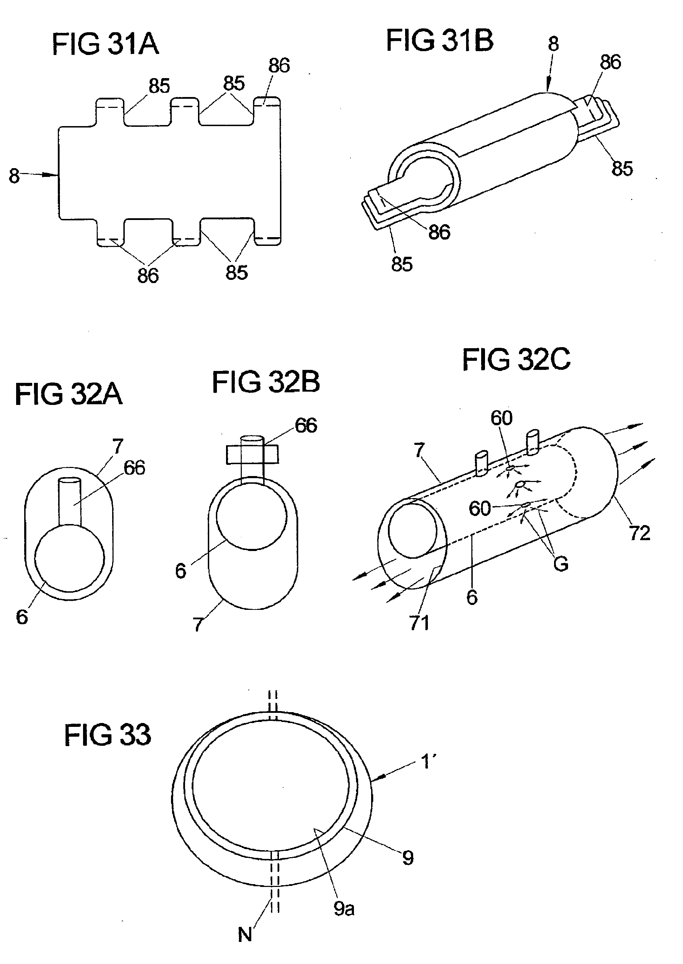

Figur 27 zeigt einen Querschnitt durch einen Verbindungsbereich 2, z.B. in Form eines Verbindungskanales) einer Airbageinrichtung der vorstehend beschriebenen Art, in dem ein Gasgenerator 6 angeordnet ist. Der Gasgenerator 6 ist in einer (hier formstabilen aber ebenso auch flexibel ausbildbaren) rohrförmigen Aufnahme 7, z. B. bestehend aus Metall, angeordnet, wie sie auch in den Figuren 32a bis 32c gezeigt ist. Die rohrförmige Aufnahme 7 umgibt den hier als Rohrgasgenerator ausgebildeten Gasgenerator 6 ringförmig, so dass aus dem Gasgenerator 6 austretendes Gas zunächst in das Innere der rohrförmigen Aufnahme 7 gelangt und anschließend in axialer Richtung aus stirnseitigen Austrittsöffnungen der rohrförmigen Aufnahme austritt, wobei beispielsweise jede von zwei stirnseitigen Austrittsöffnungen 71, 72, wie in Figur 32c dargestellt, einem aufblasbaren Bereich der Airbageinrichtung zugeordnet sein kann.

Der Gasgenerator 6 weist einen elektrischen Anschluss 61 für ein Zündkabel 62 auf, über das der Gasgenerator 6 in einem Crash-Fall sensorgesteuert gezündet werden kann. Das Zündkabel 62 erstreckt sich von einem elektrischen Anschluss 61 an einem axialen Ende des Gasgenerators 6 ausgehend in radialer Richtung an dem Gasgenerator 6 und der rohrförmigen Aufnahme 7 vorbei in einen Bereich des von dem Verbindungsbereich 2 umschlossenen Raumes außerhalb der rohrförmigen Aufnahme 7 und ist dort in axialer Richtung weitergeführt. Mittels einer den Verbindungskanal 2 umgebenden Bandage 200 kann das Zündkabel 62 dann dichtend aus dem von dem Verbindungsbereich 2 umschlossenen Raum herausgeführt werden, um eine elektrische Verbindung mit einer Steuerelektronik zur Steuerung des Gasgenerators 6 herzustellen.

Die zwischen dem Verbindungsbereich 2 und dem Gasgenerator 6 angeordnete rohrförmige Aufnahme 7, der Verbindungsbereich 2 selbst sowie die den Verbindungsbereich 2 umgebende Bandage 200 sind dabei mit dem Gasgenerator 6 über von dem Gasgenerator 6 abstehende Befestigungsbolzen 66 und zugehörige Muttern verbunden, so dass die besagten Komponenten 6, 7, 2, 200 eine bauliche Einheit bilden.

In den Figuren 32a bis 32c ist noch einmal im größeren Detail eine aus einem Gasgenerator 6 und einer formstabilen, rohr- bzw. tonnenförmigen Aufnahme 7 gebildete Baugruppe gezeigt, und zwar in Figur 32a in Form zweier Einzelteile und in den Figuren 32b und 32c im montierten Zustand, in dem die hier im Querschnitt oval ausgebildete rohrförmige Aufnahme 7 mittels von dem Gasgenerator 6 abstehender Befestigungsbolzen 66 und zugehöriger Muttern am Gasgenerator 6 festgelegt ist.

Wie insbesondere anhand Figur 32c deutlich wird, erstreckt sich die rohrförmige Aufnahme 7 in axialer Richtung des Gasgenerators 6 etwa über dieselbe Länge wie der Gasgenerator 6 selbst; und sie dient zur Weiterleitung von Gasen G, welche im Betrieb des Gasgenerators 6 aus Abströmöffnungen 60 in dessen Mantelfläche ausströmen und dann mittels der rohrförmigen Aufnahme 7 in axialer Richtung umgelenkt und dabei in zwei Teilgasströme aufgeteilt werden. Die beiden Teilgasströme treten sodann entgegengesetzt zueinander in axialer Richtung aus zwei einander gegenüberliegenden stirnseitigen Austrittsöffnungen 71, 72 der tonnenförmigen Aufnahme 7 aus, von wo aus sie in jeweils einen aufzublasenden Bereich einer Airbageinrichtung gelangen können.

In den Figuren 28a und 28b sind zwei weitere Ausführungsbeispiele rohr- bzw. tonnenförmiger Gasstromverteiler 7 dargestellt, die jeweils mittels mindestens eines Befestigungsbolzens 66 am Gasgenerator 6 festgelegt sind und die einen aus dem Gasgenerator 6 austretenden Gasstrom G in zwei Teilgasströme G1, G2 aufteilen, die in entgegengesetzter Richtung durch jeweils eine Austrittsöffnung 71, 71' bzw. 72 hindurch aus dem Gasstromverteiler 7 austreten. In den Fällen der Figuren 28a und 28b erstreckt sich dabei der jeweilige rohrförmige Gasstromverteiler 7 in axialer Richtung nicht über die gesamte Länge des Gasgenerators 6.

Die Ausführungsbeispiele aus den Figuren 28a und 28b unterscheiden sich zum einen dadurch voneinander, dass im Fall der Figur 28a die Abströmöffnungen 60 des Gasgenerators 6 in dessen Mantelfläche vorgesehen sind, während sie im Fall der Figur 28b stirnseitig am Gasgenerator 6 angeordnet sind. Ein weiterer Unterschied besteht darin, dass im Fall der Figur 28b die beiden stirnseitigen Gasaustrittsöffnungen 71', 72 des Gasstromverteilers 7 einen unterschiedlichen Austrittsquerschnitt aufweisen, so dass hier zwei aufblasbare Bereiche einer Airbageinrichtung mit einer unterschiedlichen Gasmenge befüllt werden können.

Weitere Einzelheiten solcher Gasstromverteiler sind beispielsweise in der WO 2007/062847 A1 beschrieben.

In den Figuren 29a und 29b ist ein Anordnung dargestellt, gemäß der ein in einem Verbindungskanal 2 einer Airbageinrichtung angeordneter Gasgenerator 6 von einem Schutzlagenwickel 8 als Flammschutz bzw. Schutz vor hohen Drücken umgeben ist, welcher im Querschnitt spiralförmig um den Gasgenerator 6 gewickelt ist. Der Schutzlagenwickel 8 ist zusammen mit dem Verbindungskanal 2 mittels Befestigungsbolzen 66 am Gasgenerator 6 festgelegt.

Die Figuren 30a und 30b zeigen die Anordnung aus den Figuren 29a und 29b in einem Zustand, in dem aus dem Gasgenerator 6 ein Gasstrom G zum Aufblasen der Airbageinrichtung austritt, wobei der Schutzlagenwickel 8 abgewickelt und nach außen gegen die innere Oberfläche des Verbindungskanals 2 gedrückt wird.

Hierbei ist zu beachten, dass in den Figuren 29a und 30a der Schutzlagenwickel 8 jeweils zusammen mit dem Gasgenerator 6 und dem Verbindungskanal 2 dargestellt ist, während in den perspektivischen Darstellungen der Figuren 29b und 30b der besseren Übersichtlichkeit halber der Schutzlagenwickel 8 jeweils alleine bzw. zusammen mit einem Befestigungsbolzen 66 gezeigt ist.

In den Figuren 31a und 31b ist eine Ausführungsform eines Schutzlagenwickels 8 dargestellt, welcher im gewickelten Zustand in axialer Richtung abstehende Fixierungsabschnitte 85 aufweist, an denen der Schutzlagenwickel im gewickelten Zustand mittels Reißnähten 86 provisorisch fixierbar ist. Die Verbindungen entlang der Reißnähte 86 reißen auf, wenn auf den Schutzlagenwickel 8 aus den Figuren 31 a und 31 b mittels aus einem Gasgenerator ausströmender Gase ein erhöhter Gasdruck wirkt. Dies ermöglicht ein Abwickeln und radiales Ausdehnen des Schutzlagenwickels 8 wie anhand der Figuren 30a und 30b erläutert.

In Figur 33 ist schließlich ein Flammschutz dargestellt, der durch einen innerhalb eines Verbindungsbereiches 2 (in Form eines Verbindungskanals) angeordneten Gewebeschlauch 9 erreicht wird, welcher auf seiner Innenseite mit einer hitzebeständigen Materiallage 9a versehen bzw. beschichtet ist. Diese ist einem innerhalb des Verbindungsbereiches 2 anzuordnenden Gasgenerator zugewandt.

Die anhand der vorstehenden Figuren beschriebenen Airbageinrichtungen können als ungedichtete Kopfairbag-Variante oder auch als gedichtetes System ausgelegt werden, insbesondere durch Abdichtung im Bereich des Gasgenerators, wie anhand Figur 27 dargestellt.

Für eine besonders fertigungsgerechte Ausgestaltung können die Komponenten eines jeweiligen Bausatzes zum Fügen synchronisiert und mit so genannten Poka-Yoke-Merkmalen fertigungssicher ausgelegt werden.

Die vorstehend beschriebenen Aufbauten lassen sich grundsätzlich mit allen Generatortypen, wie z. B. Pyro-, Hybrid- und Kaltgasgeneratoren realisieren.

## Patentansprüche

1. Airbagmodul, insbesondere für ein Kraftfahrzeug, mit
- einem Gassack (10), der zum Schutz einer Person aufblasbar ist,
- einer Gassackhülle (20) des Gassackes (10), die einen Innenraum (I) des Gassackes (10) definiert, der zum Aufblasen des Gassackes (10) mit Gas befüllbar ist,
- einem Gasgenerator (30) zum Bereitstellen des zum Aufblasen des Gassackes (10) benötigten Gases,
- einer Einführöffnung (21) der Gassackhülle (20), wobei der Gasgenerator (30) durch die Einführöffnung (21) in den Innenraum (I) des Gassackes (10) eingeführt ist, so dass durch den Gasgenerator (10) bereitgestelltes Gas in den Innenraum (I) des Gassackes (10) gelangen kann,
- einem die Einführöffnung (21) begrenzenden Randbereich (22) der Einführöffnung (21), der den Gasgenerator (30) ringförmig umgreift, und
- einem Dichtmittel (40) zum Abdichten der Einführöffnung (21),
**dadurch gekennzeichnet**
**dass** das Dichtmittel (40) derart zwischen dem Randbereich (22) und dem Gasgenerator (30) angeordnet ist, dass das Dichtmittel (40) durch das mittels des Gasgenerators (30) bereitgestellte Gas zum Abdichten der Einführöffnung (21) aufgeweitet und gegen den Randbereich (22) der Einführöffnung (21) gedrückt wird, wobei das Dichtmittel (40) mit einem den Gasgenerator (30) umlaufenden mittleren Abschnitt (42) gegen den Randbereich (22) der Einführöffnung (21) gedrückt wird.

2. Airbagmodul nach Anspruch 1, **dadurch gekennzeichnet, dass** der mittlere Abschnitt (42) des Dichtmittels (40) so bezüglich der mindestens einen Ausströmöffnung (31) des Gasgenerators (30) angeordnet ist, dass aus der mindestens einen Ausströmöffnung (30) ausströmendes Gas auf den mittleren Abschnitt (42) auftrifft, wobei sich der mittlere Abschnitt (42) in der besagten Querschnittsebene im Querschnitt aufweitet.

3. Airbagmodul nach einem der vorhergehenden Ansprüchen, **dadurch gekennzeichnet, dass** das Dichtmittel (40) mit einem Klemmelement (50) am Gasgenerator (30) fixiert ist.

4. Airbagmodul nach einem der vorhergehenden Ansprüche, **dadurch gekennzeichnet, dass** das Dichtmittel (40) einen mit dem mittleren Abschnitt (42) verbundenen ersten Endabschnitt (41) aufweist, der insbesondere einstückig an den mittleren Abschnitt (42) angeformt ist.

5. Airbagmodul nach den Ansprüchen 3 und 4, **dadurch gekennzeichnet, dass** das Klemmelement (50) dazu ausgebildet ist, den ersten Endabschnitt (41) gegen den Gasgenerator (30) zu drücken, so dass das Dichtmittel (40) mit dem ersten Endabschnitt (41) des Dichtmittels (40) eng am Gasgenerator (30) anliegt.

6. Airbagmodul nach Anspruch 4 oder 5, **dadurch gekennzeichnet, dass** der erste Endabschnitt (41) des Dichtmittels (40) außerhalb des Innenraumes (I) des Gassackes (10) angeordnet ist.

7. Airbagmodul nach einem der vorhergehenden Ansprüche, **dadurch gekennzeichnet, dass** das Dichtmittel (40) aus zumindest einer flexiblen Materiallage (45) gebildet ist, wobei insbesondere zumindest ein Teil (45a) der Materiallage (45) zur Ausbildung des Dichtmittels (40) entlang einer Wickelrichtung (46) aufgewickelt ist, so dass die Materiallage (45) eine umlaufende Wandung (47) des Dichtmittels (40) bildet, die eine Aufnahme (48) für den Gasgenerator (30) definiert, und wobei insbesondere der mittlere Abschnitt (42) des Dichtmittels (40) entlang der Wickelrichtung (46) umläuft.

8. Airbagmodul nach Anspruch 7, **dadurch gekennzeichnet, dass** die Materiallage (45) entlang der Wickelrichtung (46) überlappt, so dass die Wandung (47) insbesondere zwei übereinander liegende Lagen (400, 401) aufweist, wobei insbesondere die Wandung (47) entlang ihres gesamten entlang der Wickelrichtung (46) verlaufenden Umfangs (49) zumindest zwei übereinander liegende Lagen der Materiallage (45) aufweist.

9. Airbagmodul nach Anspruch 4 und nach einem der Ansprüche 7 bis 8, **dadurch gekennzeichnet, dass** übereinander liegende Lagen (400, 401) der die Wandung (47) bildenden Materiallage (45) am ersten Endabschnitt (41) des Dichtmittels (40) so miteinander mittels einer Verbindung (V), insbesondere einer Naht, verbunden sind, dass sich der erste Endabschnitt (41) des Dichtmittels (40) weniger aufweitet als der mittlere Abschnitt (42) des Dichtmittels (40) und sich insbesondere gar nicht aufweiten kann.

10. Airbagmodul nach einem der Ansprüche 4 bis 9, **dadurch gekennzeichnet, dass** der erste Endabschnitt (41) des Dichtmittels (40) über den mittleren Abschnitt (42) mit einem zweiten Endabschnitt (43) des Dichtmittels (40) verbunden ist, der innerhalb des Innenraumes (I) des Gassackes (10) angeordnet ist, wobei der zweite Endabschnitt (43) des Dichtmittels (40) insbesondere einstückig an den mittleren Abschnitt (42) des Dichtmittels (40) angeformt ist, und wobei insbesondere übereinander liegende Lagen (400, 401) der die Wandung (47) bildenden Materiallage (45) am zweiten Endabschnitt (43) des Dichtmittels (40) so miteinander mittels einer Verbindung (V'), insbesondere in Form einer Naht, verbunden sind, dass sich der zweite Endabschnitt (43) weniger aufweitet als der mittlere Abschnitt (42) des Dichtmittels (40) und sich insbesondere gar nicht aufweiten kann, und wobei insbesondere das Dichtelement (40) über den zweiten Endabschnitt (43) an der Gassackhülle (20) festgelegt ist.

11. Airbagmodul nach Anspruch 10, **dadurch gekennzeichnet, dass** an den zweiten Endabschnitt (43) des Dichtmittels (40) ein Diffusor (33) zum Verteilen des durch den Gasgenerator (30) bereitzustellenden Gases einstückig angeformt ist, wobei das Dichtmittel insbesondere über den Diffusor an der Gassackhülle (20) festgelegt ist.

12. Airbagmodul nach einem der vorangegangenen Ansprüche, **dadurch gekennzeichnet, dass** der Gasgenerator (30) entlang einer Einführrichtung (23) in die Einführöffnung (21) eingeführt ist, und dass die Gassackhülle (20) aus zumindest zwei Gassackteilen (200, 201) zusammengesetzt ist, die - bezogen auf einen flach ausgebreiteten Zustand der Gassackhülle (20), in dem die beiden Gassackteile (200, 201) flach ausgebreitet aufeinander liegen - entlang eines äußersten, entlang der Einführrichtung (23) erstreckten Randabschnitts (202) der Gassackhülle einstückig aneinander angeformt sind.

13. Airbagmodul nach Anspruch 12, **dadurch gekennzeichnet, dass** der Randabschnitt (202) einen quer zum Randabschnitt (202) verlaufenden Einschnitt (210) aufweist, so dass jener Randabschnitt (202) in einen ersten und einen zweiten Abschnitt (202a, 202b) unterteilt ist, wobei der erste Randabschnitt (202a) zum Innenraum (I) der Gassackhülle (20) hin eingeschlagen ist, so dass der Einschnitt (210) die Einführöffnung (21) bildet und der eingeschlagene erste Abschnitt (202a) am Gasgenerator (30) unter Zwischenlage des Dichtmittels (40) anliegt.

14. Airbagmodul nach Anspruch 13, **gekennzeichnet durch** eine an der Gassackhülle (20) festgelegte Schlaufe (220), die der Einführöffnung (21) entlang der Einführrichtung (23) gegenüberliegt, wobei die Schlaufe (220) zusammen mit dem ersten Abschnitt (202a) des Randabschnitts 202 der Gassackhülle (20) den Gasgenerator (30) in einer senkrecht zur Einführrichtung (21) verlaufenden Ebene ringförmig umgreift.

15. Verfahren zur Herstellung eines Gassackes, insbesondere nach einem der vorangegangenen Ansprüche, umfassend die Schritte:
- Bereitstellen einer Gassackhülle (20) eines Gassackes (10), die einen Innenraum (I) des Gassackes (10) definiert, der zum Aufblasen des Gassackes (10) mit Gas befüllbar ist,
- Einführen eines Dichtmittels (40) in die Einführöffnung (21), so dass ein die Einführöffnung (21) begrenzenden Randbereich (22) der Einführöffnung (21) einen umlaufenden mittleren Abschnitt (42) des Dichtmittels (40), der eine Aufnahme (48) für den Gasgenerator (30) bildet, ringförmig umgreift und
- Einführen des Gasgenerators (30) in die Aufnahme (48) des Dichtmittels (40) derart, dass durch den Gasgenerator (30) bereitzustellendes Gas in den Innenraum (I) des Gassackes (10) gelangen und den mittleren Abschnitt (42) aufweiten und gegen den Randbereich (22) der Einführöffnung (21) drücken kann.

## Claims

1. Airbag module, particularly for a motor vehicle, comprising
- an airbag (10) that can be inflated in order to protect a person,
- an airbag covering (20) of the airbag (10), that defines an interior space (I) of the airbag (10), that can be filled with gas for inflating the airbag (10),
- a gas generator (30) for providing the gas needed for inflating the airbag (10),
- an insertion opening (21) of the airbag covering (20), wherein the gas generator (30) is inserted through the insertion opening (21) into the interior space (I) of the airbag (10), so that gas provided by the gas generator (10) can get into the interior space (I) of the airbag (10),
- a boundary region (22) of the insertion opening (21) delimiting the insertion opening (21), which boundary region (22) annularly encompasses the gas generator (30), and
- a sealing means (40) for sealing the insertion opening (21),
**characterized in that**
the sealing means (40) is arranged between the boundary region (22) and the gas generator (30) in a way, that the sealing means (40) is widened by means of the gas provided by the gas generator (30) and pressed against the boundary region (21) of the insertion opening (21) for sealing the insertion opening (21), wherein the sealing means (40) is pressed with a middle portion (42) circulating the gas generator (30) against the boundary region (22) of the insertion opening (21).

2. Airbag module according to the claim 1, **characterized in that** the middle portion (42) of the sealing means (40) is arranged with respect to the at least one outflow opening (31) of the gas generator (30) in way, that gas flowing out of the at least one outflow opening hits the middle portion (42), wherein the middle portion (42) widens in cross section in said cross section plane.

3. Airbag module according to one of the preceding claims, **characterized in that** the sealing means (40) is fixed to the gas generator (30) by means of a clamping element (50).

4. Airbag module according to one of the preceding claims, **characterized in that** the sealing means (40) comprises a first end portion (41) connected to the middle portion (42), that is particularly integrally formed with the middle portion (42).

5. Airbag module according to the claims 3 and 4, **characterized in that** the clamping element (50) is designed to press the first end portion (41) against the gas generator (30), so that the sealing means (40) tightly butts against the gas generator (30) with the first end portion (41) of the sealing means (40).

6. Airbag module according to claim 4 or 5, **characterized in that** the first end portion (41) of the sealing means (40) is arranged outside the interior space (I) of the airbag (10).

7. Airbag module according to one of the preceding claims, **characterized in that** the sealing means (40) is formed out of at least one flexible material layer (45), wherein particularly at least one part (45a) of the material layer (45) is wound up along a winding direction (46) for forming the sealing means (40), so that the material layer (45) forms a circulating wall (47) of the sealing means (40), that defines a receptacle (48) for the gas generator (30), and wherein particularly the middle portion (42) of the sealing means (40) circulates along the winding direction (46).

8. Airbag module according to claim 7, **characterized in that** the material layer (45) overlaps along the winding direction (46), so that the wall (47) particularly comprises two layers (400, 401) lying on top of one another, wherein particularly the wall (47) comprises along its whole periphery (49) running along the winding direction (46) at least two layers of the material layer (45) lying on top of one another.

9. Airbag module according to claim 4 and according to one of the claims 7 or 8, **characterized in that** the layers (400, 401) of the material layer (45) lying on top of one another and forming the wall (47) are connected to each other by means of a connection (V), particularly a seam, in a way, that the first end portion (41) of the sealing means (40) widens less than the middle portion (42) of the sealing means (40) and does not widen in particular.

10. Airbag module according to one of the claims 4 to 9, **characterized in that** the first end portion (41) of the sealing means (40) is connected to a second end portion (43) of the sealing means (40) via the middle portion (42), which is arranged inside the interior space (I) of the airbag (10), wherein the second end portion (43) of the sealing means (40) is particularly integrally formed with the middle portion (42) of the sealing means (40), and wherein particularly the layers (400, 401) of the material layer forming the wall (47) and lying on top of one another are connected to each other at the second end portion (43) by means of a connection (V'), particularly in the form of a seam, in a way, that the second end portion (43) widens less than the middle portion (42) of the sealing means (40) and does not widen in particular, and wherein particularly the sealing element (40) is fastened to the airbag covering (20) via the second end portion (43).

11. Airbag module according to claim 10, **characterized in that** a diffusor (33) is integrally formed with the second end portion (43) of the sealing means (40) for distributing the gas that is to be provided by the gas generator (30), wherein the sealing means is particularly fastened to the airbag covering (20) via the diffusor.

12. Airbag module according to one of the preceding claims, **characterized in that** the gas generator (30) is inserted in the insertion opening (21) into the interior space along an insertion direction (23), and the airbag covering (20) consists of at least two airbag parts (200, 201) which - related to a flatly outspread state of the airbag covering (20), in which the two airbag parts (200, 201) lie on top of each other flatly outspread - are integrally formed with each other along an outermost boundary portion (202) of the airbag covering extending along the insertion direction (23).

13. Airbag module according to claim 12, **characterized in that** the boundary portion (202) comprises a cut (210) running across the boundary portion (202), so that said boundary portion (202) is divided into a first and a second portion (202a, 202b), wherein the first portion (202a) is folded in towards the interior space (I) of the airbag covering (20), so that the cut (210) forms the insertion opening (21) and the folded-in first portion (202a) butts against the gas generator (30) under interposition of the sealing means (40).

14. Airbag module according to claim 13, **characterized by** a loop (220) fastened to the airbag covering (20), that faces the insertion opening (21) along the insertion direction (23), wherein the loop (220) together with the first portion (202a) of the boundary portion (202) of the airbag covering (20) annularly encompasses the gas generator (30) in a plane running perpendicular to the insertion direction (21).

15. Method for producing an airbag, particularly according to one of the preceding claims, comprising the steps of:
- providing an airbag covering (20) of an airbag (10), that defines an interior space (I) of the airbag (10), that can be filled with gas for inflating the airbag (10),
- inserting a sealing means (40) into the insertion opening (21), so that a boundary region (22) of the insertion opening (21) delimiting the insertion opening (21) annularly encompasses a circumferential middle portion (42) of the sealing means (40), that forms a retainer (48) for the gas generator (30), and
- inserting the gas generator (30) into the retainer (48) of the sealing means (40), such that gas that is to be provided by the gas generator (30) can get into the interior space (I) of the airbag (10) and can widen the middle portion (42) and press it against the boundary region (22) of the insertion opening (21).

## Revendications

1. Module d'airbag, en particulier pour un véhicule automobile, comprenant
- un coussin gonflable (10), apte à être gonflé pour protéger une personne,
- une enveloppe (20) du coussin gonflable (10) qui définit une chambre intérieure (I) du coussin gonflable (10), laquelle peut être remplie de gaz pour le gonflage du coussin gonflable (10),
- un générateur de gaz (30) pour préparer le gaz nécessaire pour gonfler le coussin gonflable (10),
- une ouverture d'introduction (21) de l'enveloppe (20) du coussin gonflable, telle que le générateur de gaz (30) est introduit dans la chambre intérieure (I) du coussin gonflable (10) à travers l'ouverture d'introduction (21), de sorte que le gaz préparé par le générateur de gaz (10) peut parvenir dans la chambre intérieure (I) du coussin gonflable (10),
- une zone de bordure (22), de l'ouverture d'introduction (21), qui délimite l'ouverture d'introduction (21) et qui entoure le générateur de gaz (30) de manière annulaire, et
- un moyen d'étanchéité (40) pour étancher l'ouverture d'introduction (21),
**caractérisé en ce que**
le moyen d'étanchéité (40) est agencé entre la zone de bordure (22) et le générateur de gaz (30) de telle manière que le moyen d'étanchéité (40) est élargi par le gaz préparé au moyen du générateur de gaz (30), pour étancher l'ouverture d'introduction (21) et est pressé contre la zone de bordure (22) de l'ouverture d'introduction (21), ledit moyen d'étanchéité (40) étant pressé avec un tronçon médian (42), qui entoure le générateur de gaz (30), contre la zone de bordure (22) de l'ouverture d'introduction (21).

2. Module d'airbag selon la revendication 1, **caractérisé en ce que** le tronçon médian (42) du moyen d'étanchéité (40) est agencé par rapport à ladite au moins une ouverture de sortie (31) du générateur de gaz (30) de telle manière que le gaz qui s'écoule hors de ladite au moins une ouverture de sortie (30) atteint le tronçon médian (42), ledit tronçon médian (42) s'élargissant en section transversale dans le plan de section.

3. Module d'airbag selon l'une des revendications précédentes, **caractérisé en ce que** le moyen d'étanchéité (40) est fixé sur le générateur de gaz (30) avec un élément de serrage (50).

4. Module d'airbag selon l'une des revendications précédentes, **caractérisé en ce que** le moyen d'étanchéité (40) comprend un premier tronçon d'extrémité (41) relié au tronçon médian (42), le tronçon d'extrémité étant en particulier conformé d'une seule pièce sur le tronçon médian (42).

5. Module d'airbag selon les revendications 3 et 4, **caractérisé en ce que** l'élément de serrage (50) est réalisé pour presser le premier tronçon d'extrémité (41) contre le générateur de gaz (30), de sorte que le moyen d'étanchéité (40) s'applique de manière étroite contre le générateur de gaz (30) avec le premier tronçon d'extrémité (41) du moyen d'étanchéité (40).

6. Module d'airbag selon la revendication 4 ou 5, **caractérisé en ce que** le premier tronçon d'extrémité (41) du moyen d'étanchéité (40) est agencé à l'extérieur de la chambre intérieure (I) du coussin gonflable (10).

7. Module d'airbag selon l'une des revendications précédentes, **caractérisé en ce que** le moyen d'étanchéité (40) est formé d'au moins une couche de matériau flexible (45), et en particulier au moins une partie (45a) de la couche de matériau (45) est enroulée le long d'une direction d'enroulement (46) pour réaliser le moyen d'étanchéité (40), de telle façon que la couche de matériau (45) forme une paroi périphérique (46) du moyen d'étanchéité (40), laquelle définit un logement (48) pour le générateur de gaz (30), et en particulier le tronçon médian (42) du moyen d'étanchéité (40) s'étend le long de la direction d'enroulement (46).

8. Module d'airbag selon la revendication 7, **caractérisé en ce que** la couche de matériau (45) est en chevauchement le long de la direction d'enroulement (46), de sorte que la paroi (47) comprend en particulier deux couches superposées (400, 401), et en particulier la paroi (47) comporte, le long de la totalité de sa périphérie (49) s'étendant le long de la direction d'enroulement (46), au moins deux couches superposées de la couche de matériau (45).

9. Module d'airbag selon la revendication 4 et selon l'une des revendications 7 à 8, **caractérisé en ce que** les couches superposées (400, 401) de la couche de matériau (45) formant la paroi (47) sont reliées, au niveau du premier tronçon d'extrémité (41) du moyen d'étanchéité (40) les unes aux autres au moyen d'une liaison (V), en particulier d'une couture, de telle façon que le premier tronçon d'extrémité (41) du moyen d'étanchéité (40) s'élargit moins que le tronçon médian (42) du moyen d'étanchéité (40), et ne peut en particulier absolument pas s'élargir.

10. Module d'airbag selon l'une des revendications 4 à 9, **caractérisé en ce que** le premier tronçon d'extrémité (41) du moyen d'étanchéité (40) est relié via le tronçon médian (42) à un second tronçon d'extrémité (43) du moyen d'étanchéité (40) qui est agencé à l'intérieur de la chambre intérieure (I) du coussin gonflable (10), dans lequel le second tronçon d'extrémité (43) du moyen d'étanchéité (40) est conformé en particulier d'un seul tenant sur le tronçon médian (42) du moyen d'étanchéité (40), et dans lequel en particulier des couches superposées (400, 401), de la couche de matériau (45) formant la paroi (47), sont reliées l'une à l'autre, au niveau du second tronçon d'extrémité (43) du moyen d'étanchéité (40) au moyen d'une liaison (V'), en particulier sous la forme d'une couture, de telle manière que le second tronçon d'extrémité (43) s'élargit moins que le tronçon médian (42) du moyen d'étanchéité (40) et ne peut en particulier absolument pas être élargi, et dans lequel en particulier l'élément d'étanchéité (40) est immobilisé sur l'enveloppe de coussin gonflable (20) via le second tronçon d'extrémité (43).

11. Module d'airbag selon la revendication 10, **caractérisé en ce qu'**un diffuseur (33), destiné à répartir le gaz préparé par le générateur de gaz (30), est conformé d'une seule pièce sur le second tronçon d'extrémité (43) du moyen d'étanchéité (40), dans lequel le moyen d'étanchéité est en particulier représenté par le diffuseur sur l'enveloppe de coussin gonflable (20).

12. Module d'airbag selon l'une des revendications précédentes, **caractérisé en ce que** le générateur de gaz (30) est introduit dans l'ouverture d'introduction (21) le long d'une direction d'introduction (23), et **en ce que** l'enveloppe (20) du coussin gonflable est composée d'au moins deux parties de coussin gonflable (200, 201) qui, par référence à une situation étendue à plat de l'enveloppe (20) du coussin gonflable, situation dans laquelle les deux parties du coussin gonflable (200, 201) reposent l'une sur l'autre en étant étalées à plat, sont conformées d'une seule pièce l'une contre l'autre le long d'un tronçon de bordure (202) extérieur, s'étendant dans la direction d'introduction (23) de l'enveloppe du coussin gonflable.

13. Module d'airbag selon la revendication 12, **caractérisé en ce que** le tronçon de bordure (202) comporte une entaille (210) s'étendant transversalement au tronçon de bordure (202), de sorte que ce tronçon de bordure (202) est subdivisé en un premier et un second tronçon (202a, 202b), et le premier tronçon de bordure (202a) est rabattu en direction de l'espace intérieur (I) de l'enveloppe (20) du coussin gonflable, de telle façon que l'entaille (210) forme l'ouverture d'introduction (21) et le premier tronçon rabattu (202a) est appliqué contre le générateur de gaz (30) avec interposition du moyen d'étanchéité (40).

14. Module d'airbag selon la revendication 13, **caractérisé par** une boucle (220) solidarisée sur l'enveloppe (20) du coussin gonflable, qui se trouve à l'opposé de l'ouverture d'introduction (21) le long de la direction d'introduction (23), ladite boucle (220), conjointement avec le premier tronçon (202a) du tronçon de bordure (202) de l'enveloppe (20) du coussin gonflable, entourant de manière annulaire le générateur de gaz (30) dans un plan perpendiculaire à la direction d'introduction (21).

15. Procédé pour la fabrication d'un coussin gonflable, en particulier selon l'une des revendications précédentes, comprenant les étapes consistant à :
- préparer une enveloppe (20) d'un coussin gonflable (10), qui définit un espace intérieur (I) du coussin gonflable (10), espace qui peut être rempli de gaz par le gonflage du coussin gonflable (10),
- introduire un moyen d'étanchéité (40) dans l'ouverture d'introduction (21), de sorte qu'une zone de bordure (22) de l'ouverture d'introduction (21), qui délimite l'ouverture d'introduction (21), entoure de manière annulaire un tronçon médian périphérique (42) du moyen d'étanchéité (40), lequel forme un logement (48) pour le générateur de gaz (30), et
- introduire le générateur de gaz (30) dans le logement (48) du moyen d'étanchéité (40), de telle façon que le gaz préparé par le générateur de gaz (30) peut parvenir dans l'espace intérieur (I) du coussin gonflable (10) et élargir le tronçon médian (42), et pousser celui-ci contre la zone de bordure (22) de l'ouverture d'introduction (21).
